(19) Europäisches Patentamt
European Patent Office
Office européen des brevets

(11) **EP 4 524 774 A1**

(12) **EUROPEAN PATENT APPLICATION**
published in accordance with Art. 153(4) EPC

(43) Date of publication:
**19.03.2025 Bulletin 2025/12**

(21) Application number: **23819065.6**

(22) Date of filing: **05.06.2023**

(51) International Patent Classification (IPC):
*G06F 16/9535* (2019.01)

(52) Cooperative Patent Classification (CPC):
**G06F 16/2457; G06F 16/9535; G06N 3/04; G06N 3/08**

(86) International application number:
**PCT/CN2023/098289**

(87) International publication number:
**WO 2023/236900 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.06.2022 CN 202210641372**

(71) Applicant: **Huawei Technologies Co., Ltd.
Shenzhen, Guangdong 518129 (CN)**

(72) Inventors:
• **JIA, Qinglin
Shenzhen, Guangdong 518129 (CN)**
• **ZHU, Jieming
Shenzhen, Guangdong 518129 (CN)**
• **CAI, Guohao
Shenzhen, Guangdong 518129 (CN)**
• **TANG, Ruiming
Shenzhen, Guangdong 518129 (CN)**
• **DONG, Zhenhua
Shenzhen, Guangdong 518129 (CN)**

(74) Representative: **Körber, Martin Hans et al
Mitscherlich PartmbB
Patent- und Rechtsanwälte
Karlstraße 7
80333 München (DE)**

(54) **ITEM RECOMMENDATION METHOD AND RELATED DEVICE THEREOF**

(57) This application discloses an item recommendation method and a related device thereof, so that not only probabilities of tapping some items that frequently appear by a user and probabilities of tapping some items that almost never appear by the user can be accurately predicted, but also a probability of tapping a remaining item other than the two types of items by the user can be accurately predicted, to improve overall prediction precision of a model. The method in this application includes: obtaining first information, where the first information includes attribute information of a user and attribute information of an item; and processing the first information by using a first model to obtain a first processing result, where the first processing result is used to determine the item recommended to the user, and the first model is configured to: perform a linear operation on the first information to obtain second information; perform a nonlinear operation on the second information to obtain third information; and obtain the first processing result based on the third information.

FIG. 4

**Description**

This application claims priority to Chinese Patent Application No. 202210641372.7, filed with the China National Intellectual Property Administration on June 8, 2022 and entitled "ITEM RECOMMENDATION METHOD AND RELATED DEVICE THEREOF", which is incorporated herein by reference in its entirety.

**TECHNICAL FIELD**

This application relates to the field of artificial intelligence (AI) technologies, and in particular, to an item recommendation method and a related device thereof.

**BACKGROUND**

With rapid development of computer technologies, to meet Internet access requirements of users, developers increasingly tend to present, on pages of applications, content that the users are interested in. Based on this, for a page of an application, it is usually necessary to predict which item (item) or items displayed on the page may be tapped by a user, that is, predict a behavior of the user on the page, so as to modify an item that needs to be presented on the page, and recommend an item that the user is interested in.

Currently, a probability of tapping an item on the page of the application by the user may be predicted by using a neural network model of the AI technology. Specifically, a neural network model provided in a related technology may include two branches. A first branch may be referred to as a first model, and a second branch may be referred to as a second model. The first model may perform a linear operation on input information (including attribute information of the user, attribute information of the item, and the like). The second model may perform a nonlinear operation on the input information. Based on operation results of the two models, a probability of tapping each item by the user may be obtained. Therefore, an item with a higher probability may be determined as an item recommended to the user.

However, in the linear operation process, the first model mainly focuses a relationship between some items that frequently appear and the user; and in the nonlinear operation process, the second model mainly focuses a relationship between some items that almost never appear and the user. A relationship between a remaining item other than the two types of items and the user is ignored. Although the neural network model can accurately predict probabilities of tapping the two types of items by the user, a probability of tapping the remaining item by the user cannot be accurately predicted. Consequently, overall prediction precision of the neural network model is low.

**SUMMARY**

Embodiments of this application provide an item recommendation method and a related device thereof, so that not only probabilities of tapping some items that frequently appear by a user and probabilities of tapping some items that almost never appear by the user can be accurately predicted, but also a probability of tapping a remaining item other than the two types of items by the user can be accurately predicted, to improve overall prediction precision of a model.

A first aspect of embodiments of this application provides an item recommendation method, and the method includes the following content.

When a user uses an application, to predict a behavior of the user on a page of the application, first information associated with the user may be first obtained. The first information includes at least attribute information of the user and attribute information of an item that can be presented on the page of the application. The attribute information of the user may include information such as a name, an age, a gender, and a job of the user. The attribute information of the item may include information such as a name, a type, a function, and a price of the item.

After the first information is obtained, a first model (a trained neural network model) may be obtained, and the first information is input into the first model, so that the first model processes the first information to obtain a first processing result. The first processing result may be used to obtain probabilities of tapping, by the user, items that can be presented on the page of the application, and these probabilities may be used to determine an item recommended to the user (for example, in the items that can be presented on the page of the application, an item with a higher probability is determined as the item recommended to the user). A process in which the first model processes the first information includes: First, the first model performs a linear operation on the first information to obtain second information. Then, the first model performs a nonlinear operation on the second information to obtain third information. Finally, the first model obtains the first processing result based on the third information.

It should be noted that the linear operation herein usually refers to an operation including only addition and quantity multiplication, for example, $y=wx+b$, where x is input information (a vector), y is information obtained through calculation, w is a weight, and b is a constant. The nonlinear operation herein usually refers to an operation of adding a nonlinear activation function based on the linear operation. A function feature of the nonlinear activation function is that discontinuous guidable points exist in function space. For example, common nonlinear activation functions include ReLu, Sigmoid, tanh, and the like.

It can be learned from the foregoing method that, after the first information including the attribute information of the user and the attribute information of the item is obtained, the first information may be input to the first model for processing, to obtain the first processing result. The first processing result may be used to determine a probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

In a possible implementation, the first model is configured to: perform the linear operation on the first information to obtain the second information; perform the nonlinear operation on the first information and the second information to obtain the third information; fuse the second information and the third information to obtain fourth information; and obtain the first processing result based on the fourth information. In the foregoing implementation, it is assumed that the first model includes only one interaction unit, and the interaction unit may include one linear layer, one nonlinear layer, and one fusion layer. An input end of the linear layer is an input end of the interaction unit, a first input end of the nonlinear layer is the input end of the interaction unit, a first output end of the linear layer is connected to a second input end of the nonlinear layer, a second output end of the linear layer is connected to an input end of the fusion layer, an output end of the nonlinear layer is connected to the input end of the fusion layer, and an output end of the fusion layer is an output end of the interaction unit. In this case, the first information is input to the interaction unit in the first model, and both the linear layer in the interaction unit and the nonlinear layer in the interaction unit can receive the first information. Then, the linear layer may perform a linear operation on the first information to obtain a linear operation result (namely, the second information) of the linear layer, and input the linear operation result of the linear layer to the nonlinear layer and the fusion layer. Then, the nonlinear layer may perform a nonlinear operation on the first information and the linear operation result of the linear layer, to obtain a nonlinear operation result (namely, the third information) of the nonlinear layer, and input the nonlinear operation result of the nonlinear layer to the fusion layer. Finally, the fusion layer may fuse the linear operation result of the linear layer and the nonlinear operation result of the nonlinear layer. A fusion result (namely, the fourth information) may be directly used as an output of the interaction unit, namely, an output of the first model, namely, the first processing result of the first model for the first information.

In a possible implementation, the method further includes: processing the first information by using a second model to obtain a second processing result, where the second model is at least one of the following: a multilayer perceptron, a convolutional network, an attention network, a Squeeze-and-Excitation network, or a model that is the same as the first model; and fusing the first processing result and the second processing result by using a third model, where a result obtained through fusion is used to determine the item recommended to the user. The foregoing implementation provides a target model. The target model includes the first model, the second model, and the third model, and the three models are all trained neural network models. The first model and the second model are used as two parallel branches, an output end of the first model and an output end of the second model are both connected to an input end of the third model, an input end of the first model and an input end of the second model may be configured to receive the first information, and an output end of the third model may output the probabilities of tapping, by the user, the items that can be presented on the page of the application. In this case, when the first information is input into the first model, the first information may be further input into the second model, so that the second model processes the first information to obtain the second processing result. After the first model obtains the first processing result and the second model obtains the second processing result, the first model may send the first processing result to the third model, and the second model may send the second processing result to the third model, so that the third model fuses the first processing result and the second processing result, and the result obtained through fusion is the probabilities of tapping, by the user, the items that can be presented on the page of the application. Therefore, these probabilities may be used to determine the item recommended to the user (for example, in the items that can be presented on the page of the application, an item with a higher probability is determined as the item recommended to the user). The second model may be at least one of the multilayer perceptron, the convolutional network, the attention network, the Squeeze-and-Excitation network, or the model that is the same as the first model. Therefore, the first model and the second model in the target model may form a plurality of types of model combinations, so that the target model provides services for more service scenarios, and has high generalization performance.

In a possible implementation, the first model includes N interaction units, an input of an $i^{th}$ interaction unit is an output of an $(i-1)^{th}$ interaction unit, N≥1, and i=1, ..., or N; and the processing the first information by using the first model to obtain the first processing result includes: performing a linear operation on the input of the $i^{th}$ interaction unit by using the $i^{th}$ interaction unit, to obtain a linear operation result of the $i^{th}$ interaction unit; performing a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and fusing the linear operation result of the $i^{th}$ interaction unit and the nonlinear operation result of the $i^{th}$ interaction unit by using the $i^{th}$ interaction unit, to obtain an output of the $i^{th}$ interaction unit, where an input of a first interaction unit is the first information, a linear operation result of a first interaction model is the second information, a nonlinear operation result of the first interaction model is the third information, an output of the first interaction model is the fourth information, and an output of an $N^{th}$ interaction model is the first processing result. In the foregoing implementation, it is assumed that the first model includes N interaction units connected in series. For any one of the N interaction units, that is, for the $i^{th}$ interaction unit (i=1, ..., or N), the $i^{th}$ interaction unit may include one linear layer, one nonlinear layer, and one fusion layer. An input end of the linear layer of the $i^{th}$ interaction unit is an input end of the $i^{th}$ interaction unit, a first input end of the nonlinear layer of the $i^{th}$ interaction unit is an input end of the $i^{th}$ interaction unit, a first output end of the linear layer of the $i^{th}$ interaction unit is connected to a second input end of the nonlinear layer of the $i^{th}$ interaction unit, a second output end of the linear layer of the $i^{th}$ interaction unit is connected to an input end of the fusion layer of the $i^{th}$ interaction unit, an output end of the nonlinear layer of the $i^{th}$ interaction unit is connected to the input end of the fusion layer of the $i^{th}$ interaction unit, and an output end of the fusion layer of the $i^{th}$ interaction unit is an output end of the $i^{th}$ interaction unit. For a remaining interaction unit other than the $i^{th}$ interaction unit, an internal structure of the remaining interaction unit is also the same, and details are not described herein again. In this case, after receiving the input of the $i^{th}$ interaction unit (namely, the output of the $(i-1)^{th}$ interaction unit), the $i^{th}$ interaction unit may perform the following operations on the input of the $i^{th}$ interaction unit: The linear layer of the $i^{th}$ interaction unit may perform the linear operation on the input of the $i^{th}$ interaction unit, to obtain the linear operation result of the linear layer of the $i^{th}$ interaction unit, and input the linear operation result of the linear layer of the $i^{th}$ interaction unit to the nonlinear layer of the $i^{th}$ interaction unit and the fusion layer of the $i^{th}$ interaction unit. Then, the nonlinear layer of the $i^{th}$ interaction unit may perform the nonlinear operation on the input of the $i^{th}$ interaction unit and the linear operation result of the linear layer of the $i^{th}$ interaction unit, to obtain the nonlinear operation result of the nonlinear layer of the $i^{th}$ interaction unit, and input the nonlinear operation result of the nonlinear layer of the $i^{th}$ interaction unit to the fusion layer of the $i^{th}$ interaction unit. Then, the fusion layer of the $i^{th}$ interaction unit may fuse the linear operation result of the linear layer of the $i^{th}$ interaction unit and the nonlinear operation result of the nonlinear layer of the $i^{th}$ interaction unit. A fusion result of the fusion layer of the $i^{th}$ interaction unit may be directly used as an output of the $i^{th}$ interaction unit, and is input to an $(i+1)^{th}$ interaction unit. It should be noted that the input of the first interaction unit is the first information, and the output of the $N^{th}$ interaction unit is the first processing result. It can be learned that the first model may include N interaction units, each interaction unit may include one linear layer and one nonlinear layer, and the N interaction units are in a series connection relationship. The N interaction units are used to process the first information, so that linear operations and nonlinear operations of a specific quantity may be implemented on the first information. The obtained first processing result is high-order information (namely, 2^N-order information), and the information is used as or used to determine a final prediction result, namely, the probability of tapping each item by the user. This has high accuracy.

In a possible implementation, the processing the first information by using the first model to obtain the first processing result further includes: performing a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and the fusing the linear operation result of the $i^{th}$ interaction unit and the nonlinear operation result of the $i^{th}$ interaction unit by using the $i^{th}$ interaction unit, to obtain an output of the $i^{th}$ interaction unit includes: fusing the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit. In the foregoing implementation, it is assumed that the first model includes N interaction units connected in series. For any one of the N interaction units, that is, for the $i^{th}$ interaction unit (i=1, ..., or N), the $i^{th}$ interaction unit may include one linear layer, K-1 nonlinear layers (K is a positive integer greater than or equal to 3), and one fusion layer. An input end of the linear layer of the $i^{th}$ interaction unit is an input end of the $i^{th}$ interaction unit, first input ends of the K-1 nonlinear layers of the $i^{th}$ interaction unit are all input ends of the $i^{th}$ interaction unit, a first output end of the linear layer of the $i^{th}$ interaction unit is connected to a second input end of a first nonlinear layer of the $i^{th}$ interaction unit, a first output end of the first nonlinear layer of the $i^{th}$ interaction unit is connected to a second input end of a second nonlinear layer of the $i^{th}$ interaction unit, ..., a first output end of a $(K-2)^{th}$ nonlinear layer of the $i^{th}$ interaction unit is connected to a second input end of a $(K-1)^{th}$ nonlinear layer of the $i^{th}$ interaction unit, a second output end of the linear layer of the $i^{th}$ interaction unit is connected to an input end of the fusion layer of the $i^{th}$ interaction unit, second output ends of the K-1 nonlinear layers of the $i^{th}$ interaction unit are connected to the input end of the fusion layer of the $i^{th}$ interaction unit, and an output end of the fusion layer of the $i^{th}$ interaction unit is an output end of the $i^{th}$ interaction unit. For a remaining interaction unit other than the $i^{th}$ interaction unit, an internal structure of the remaining interaction unit is also the same, and details are not described herein again. In this case, after receiving the input of the $i^{th}$ interaction unit (namely, the output of the $(i-1)^{th}$ interaction unit), the $i^{th}$ interaction unit may perform the following operations on the input of the $i^{th}$ interaction unit: The linear layer of the $i^{th}$ interaction unit may perform the linear operation on the input of the $i^{th}$ interaction unit, to obtain the linear operation result of the linear layer of the $i^{th}$ interaction unit, and input the linear operation result of the linear layer of the $i^{th}$ interaction unit to the first nonlinear layer of the $i^{th}$ interaction unit and the fusion layer of the $i^{th}$ interaction unit. Then, the first nonlinear layer of the $i^{th}$ interaction unit may perform a nonlinear operation on the input of the $i^{th}$ interaction unit and the linear operation result of the linear layer of the $i^{th}$ interaction unit, to obtain a nonlinear operation result of the first nonlinear layer of the $i^{th}$ interaction unit, and input the nonlinear operation result of the first nonlinear layer of the $i^{th}$ interaction unit to the second nonlinear layer and the fusion layer of the $i^{th}$ interaction unit. Then, the second nonlinear layer of the $i^{th}$ interaction unit may perform a nonlinear operation on the input of the $i^{th}$ interaction unit and the nonlinear operation result of the first nonlinear layer of the $i^{th}$ interaction unit, to obtain a nonlinear operation result of the second nonlinear layer of the $i^{th}$ interaction unit, and input the nonlinear operation result of the second nonlinear layer of the $i^{th}$ interaction unit to a third nonlinear layer and the fusion layer of the $i^{th}$ interaction unit, ..., and the $(K-1)^{th}$ nonlinear layer of the $i^{th}$ interaction unit may perform a nonlinear operation on the input of the $i^{th}$ interaction unit and a nonlinear operation result of the $(K-2)^{th}$ nonlinear layer of the $i^{th}$ interaction unit, to obtain a nonlinear operation result of the $(K-1)^{th}$ nonlinear layer of the $i^{th}$ interaction unit, and input the nonlinear operation result of the $(K-1)^{th}$ nonlinear layer of the $i^{th}$ interaction unit to the fusion layer of the $i^{th}$ interaction unit. Then, the fusion layer of the $i^{th}$ interaction unit may fuse the linear operation result of the linear layer of the $i^{th}$ interaction unit and nonlinear operation results of K-1 nonlinear layers of the $i^{th}$ interaction unit. A fusion result of the fusion layer of the $i^{th}$ interaction unit may be directly used as an output of the $i^{th}$ interaction unit, and is input to an $(i+1)^{th}$ interaction unit. It should be noted that the input of the first interaction unit is the first information, and the output of the $N^{th}$ interaction unit is the first processing result. It can be learned that the first model may include N interaction units, each interaction unit may include one linear layer and a plurality of nonlinear layers, and the N interaction units are in a series connection relationship. The N interaction units are used to process the first information, so that linear operations and nonlinear operations of a specific quantity may be implemented on the first information. The obtained first processing result is high-order information (namely, K^N-order information), and the information is used as or used to determine a final prediction result, namely, the probability of tapping each item by the user. This has high accuracy.

In a possible implementation, the first information further includes information about an operation performed by the user on the application and attribute information of the application, and the application is used to provide the item for the user.

A second aspect of embodiments of this application provides a model training method, and the method includes: obtaining first information, where the first information includes attribute information of a user and attribute information of an item; processing the first information by using a first to-be-trained model to obtain a first processing result, where the first processing result is used to determine a probability of tapping the item by the user, the probability of tapping the item by the user is used to determine the item recommended to the user, the first to-be-trained model is configured to: perform a linear operation on the first information to obtain second information; perform a nonlinear operation on the second information to obtain third information; and obtain the first processing result based on the third information; obtaining a target loss based on the probability of tapping the item by the user and a real probability of tapping the item by the user, where the target loss indicates a difference between the probability of tapping the item by the user and the real probability of tapping the item by the user; and updating a parameter of the first to-be-trained model based on the target loss until a model training condition is met, to obtain a first model.

The first model obtained through training in the method has a capability of predicting a user behavior. Specifically, after the first information including the attribute information of the user and the attribute information of the item is obtained, the first information may be input to the first model for processing, to obtain the first processing result. The first processing result may be used to determine the probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

In a possible implementation, the obtaining the first processing result based on the second information and the third information includes: fusing the second information and the third information to obtain fourth information; and obtaining the first processing result based on the fourth information.

In a possible implementation, the method further includes: processing the first information by using a to-be-trained second model to obtain a second processing result, where the second to-be-trained model is at least one of the following: a multilayer perceptron, a convolutional network, an attention network, a Squeeze-and-Excitation network, or a model that is the same as the first to-be-trained model; and fusing the first processing result and the second processing result by using a third to-be-trained model, where a result obtained through fusion is the probability of tapping the item by the user.

In a possible implementation, the obtaining a target loss based on the probability of tapping the item by the user and a real probability of tapping the item by the user, where the target loss indicates a difference between the probability of tapping the item by the user and the real probability of tapping the item by the user includes: obtaining the target loss based on the probability of tapping the item by the user, the real probability of tapping the item by the user, the first processing result, and the second processing result, where the target loss indicates the difference between the probability of tapping the item by the user and the real probability of tapping the item by the user, a difference between the first processing result and the probability of tapping the item by the user, and a difference between the second processing result and the probability of tapping the item by the user; and the updating a parameter of the first to-be-trained model based on the target loss until a model training condition is met, to obtain a first model includes: updating the parameter of the first to-be-trained model, a parameter of the second to-be-trained model, and a parameter of the third to-be-trained model based on the target loss until the model training condition is met, to correspondingly obtain the first model, a second model, and a third model. The foregoing implementation provides a new model training manner, so that not only an overall loss can be calculated for the to-be-trained model, but also corresponding losses can be calculated for different branch models in the to-be-trained model, to indicate, based on these losses, parameters of different branches in the model to be updated in a targeted manner, so as to improve performance of a neural network model obtained through training.

In a possible implementation, the first to-be-trained model includes N interaction units, an input of an $i^{th}$ interaction unit is an output of an $(i-1)^{th}$ interaction unit, $N \geq 1$, and i=1, ..., or N; and the processing the first information by using the to-be-trained first model to obtain the first processing result includes: performing a linear operation on the input of the $i^{th}$ interaction unit by using the $i^{th}$ interaction unit, to obtain a linear operation result of the $i^{th}$ interaction unit; performing a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and fusing the linear operation result of the $i^{th}$ interaction unit and the nonlinear operation result of the $i^{th}$ interaction unit by using the $i^{th}$ interaction unit, to obtain an output of the $i^{th}$ interaction unit, where an input of a first interaction unit is the first information, a linear operation result of the first interaction model is the second information, a nonlinear operation result of the first interaction model is the third information, an output of the first interaction model is the fourth information, and an output of an $N^{th}$ interaction model is the first processing result.

In a possible implementation, the processing the first information by using the to-be-trained first model to obtain the first processing result further includes: performing a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and the fusing the linear operation result of the $i^{th}$ interaction unit and the nonlinear operation result of the $i^{th}$ interaction unit by using the $i^{th}$ interaction unit, to obtain an output of the $i^{th}$ interaction unit includes: fusing the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

In a possible implementation, the first information further includes information about an operation performed by the user on the application and attribute information of the application, and the application is used to provide the item for the user.

A third aspect of embodiments of this application provides an item recommendation apparatus, and the apparatus includes: an obtaining module, configured to obtain first information, where the first information includes attribute information of a user and attribute information of an item; and a first processing module, configured to process the first information by using a first model to obtain a first processing result, where the first processing result is used to determine a probability of tapping the item by the user, and the first model is configured to: perform a linear operation on the first information to obtain second information; perform a nonlinear operation on the second information to obtain third information; and obtain the first processing result based on the third information.

It can be learned from the foregoing apparatus that, after the first information including the attribute information of the user and the attribute information of the item is obtained, the first information may be input to the first model for processing, to obtain the first processing result. The first processing result may be used to determine a probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

In a possible implementation, the first model is configured to: perform the linear operation on the first information to obtain the second information; perform the nonlinear operation on the first information and the second information to obtain the third information; fuse the second information and the third information to obtain fourth information; and obtain the first processing result based on the fourth information.

In a possible implementation, the apparatus further includes: a second processing module, configured to process the first information by using a second model to obtain a second processing result, where the second model is at least one of the following: a multilayer perceptron, a convolutional network, an attention network, a Squeeze-and-Excitation network, or a model that is the same as the first model; and a third processing module, configured to fuse the first processing result and the second processing result by using a third model, where a result obtained through fusion is used to determine the item recommended to the user.

In a possible implementation, the first model includes N interaction units, an input of an $i^{th}$ interaction unit is an output of an $(i-1)^{th}$ interaction unit, $N \geq 1$, and $i=1, ..., $ or $N$; and the first processing module is configured to: perform a linear operation on the input of the $i^{th}$ interaction unit by using the $i^{th}$ interaction unit, to obtain a linear operation result of the $i^{th}$ interaction unit; perform a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and fuse the linear operation result of the $i^{th}$ interaction unit and the nonlinear operation result of the $i^{th}$ interaction unit by using the $i^{th}$ interaction unit, to obtain an output of the $i^{th}$ interaction unit, where an input of a first interaction unit is the first information, a linear operation result of a first interaction model is the second information, a nonlinear operation result of the first interaction model is the third information, an output of the first interaction model is the fourth information, and an output of an $N^{th}$ interaction model is the first processing result.

In a possible implementation, the first processing module is further configured to perform a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and the first processing module is configured to fuse the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

In a possible implementation, the first information further includes information about an operation performed by the user on the application and attribute information of the application, and the application is used to provide the item for the user.

A fourth aspect of embodiments of this application provides a model training apparatus, and the apparatus includes: a first obtaining module, configured to obtain first information, where the first information includes attribute information of a user and attribute information of an item; a first processing module, configured to process the first information by using a first to-be-trained model to obtain a first processing result, where the first processing result is used to determine a probability of tapping the item by the user, the probability of tapping the item by the user is used to determine the item recommended to the user, the first to-be-trained model is configured to: perform a linear operation on the first information to obtain second information; perform a nonlinear operation on the second information to obtain third information; and obtain the first processing result based on the third information; a second obtaining module, configured to obtain a target loss based on the probability of tapping the item by the user and a real probability of tapping the item by the user, where the target loss indicates a difference between the probability of tapping the item by the user and the real probability of tapping the item by the user; and an update module, configured to update a parameter of the first to-be-trained model based on the target loss until a model training condition is met, to obtain a first model.

The first model obtained through training by the apparatus has a capability of predicting a user behavior. Specifically, after the first information including the attribute information of the user and the attribute information of the item is obtained, the first information may be input to the first model for processing, to obtain the first processing result. The first processing result may be used to determine the probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

In a possible implementation, the apparatus further includes: a second processing module, configured to process the first information by using a second to-be-trained model to obtain a second processing result, where the second to-be-trained model is at least one of the following: a multilayer perceptron, a convolutional network, an attention network, a Squeeze-and-Excitation network, or a model that is the same as the first to-be-trained model; and a third processing module, configured to fuse the first processing result and the second processing result by using a third to-be-trained model, where a result obtained through fusion is the probability of tapping the item by the user.

In a possible implementation, the second obtaining module is configured to obtain the target loss based on the probability of tapping the item by the user, the real probability of tapping the item by the user, the first processing result, and the second processing result, where the target loss indicates the difference between the probability of tapping the item by the user and the real probability of tapping the item by the user, a difference between the first processing result and the probability of tapping the item by the user, and a difference between the second processing result and the probability of tapping the item by the user; and the update module is configured to update the parameter of the first to-be-trained model, a parameter of the second to-be-trained model, and a parameter of the third to-be-trained model based on the target loss until the model training condition is met, to correspondingly obtain the first model, a second model, and a third model.

In a possible implementation, the first to-be-trained model is configured to: fuse the second information and the third information to obtain fourth information; and obtain the first processing result based on the fourth information.

In a possible implementation, the first to-be-trained model includes N interaction units, an input of an $i^{th}$ interaction unit is an output of an $(i-1)^{th}$ interaction unit, $N \geq 1$, and i=1, ..., or N; and the first processing module is configured to: perform a linear operation on the input of the $i^{th}$ interaction unit by using the $i^{th}$ interaction unit, to obtain a linear operation result of the $i^{th}$ interaction unit; perform a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and fuse the linear operation result of the $i^{th}$ interaction unit and the nonlinear operation result of the $i^{th}$ interaction unit by using the $i^{th}$ interaction unit, to obtain an output of the $i^{th}$ interaction unit, where an input of a first interaction model is the first information, a linear operation result of the first interaction model is the second information, a nonlinear operation result of the first interaction model is the third information, an output of the first interaction model is the fourth information, and an output of an $N^{th}$ interaction model is the first processing result.

In a possible implementation, the first processing module is further configured to perform a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and the first processing module is configured to fuse the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

In a possible implementation, the first information further includes information about an operation performed by the user on the application and attribute information of the application, and the application is used to provide the item for the user.

A fifth aspect of embodiments of this application provides an item recommendation apparatus. The apparatus includes a memory and a processor. The memory stores code, the processor is configured to execute the code, and when the code is executed, the item recommendation apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to implement the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to implement the method according to any one of the first aspect, the possible implementations of the first aspect, the second aspect, or the possible implementations of the second aspect.

In embodiments of this application, after first information including attribute information of a user and attribute information of an item is obtained, the first information may be input to a first model for processing, to obtain a first processing result. The first processing result may be used to determine a probability of tapping the item by the user. When processing the first information, the first model first performs a linear operation on the first information to obtain second information, then performs a nonlinear operation on the first information and the second information to obtain third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

BRIEF DESCRIPTION OF DRAWINGS

FIG. 1 is a diagram of a structure of an artificial intelligence main framework;

FIG. 2a is a diagram of a structure of an item recommendation system according to an embodiment of this application;

FIG. 2b is another diagram of a structure of an item recommendation system according to an embodiment of this application;

FIG. 2c is a diagram of an item recommendation-related device according to an embodiment of this application;

FIG. 3 is a diagram of an architecture of a system 100 according to an embodiment of this application;

FIG. 4 is a schematic flowchart of an item recommendation method according to an embodiment of this application;

FIG. 5 is a diagram of a structure of a first model according to an embodiment of this application;

FIG. 6 is another diagram of a structure of a first model according to an embodiment of this application;

FIG. 7 is another diagram of a structure of a first model according to an embodiment of this application;

FIG. 8 is another diagram of a structure of a first model according to an embodiment of this application;

FIG. 9 is another schematic flowchart of an item recommendation method according to an embodiment of this application;

FIG. 10 is a diagram of a structure of a target model according to an embodiment of this application;

FIG. 11 is a schematic flowchart of a model training method according to an embodiment of this application;

FIG. 12 is a diagram of a structure of an item recommendation apparatus according to an embodiment of this application;

FIG. 13 is a diagram of a structure of a model training apparatus according to an embodiment of this application;

FIG. 14 is a diagram of a structure of an execution device according to an embodiment of this application;

FIG. 15 is a diagram of a structure of a training device according to an embodiment of this application; and

FIG. 16 is a diagram of a structure of a chip according to an embodiment of this application.

DESCRIPTION OF EMBODIMENTS

Embodiments of this application provide an item recommendation method and a related device thereof, so that not only probabilities of tapping some items that frequently appear by a user and probabilities of tapping some items that almost never appear by the user can be accurately predicted, but also a probability of tapping a remaining item other than the two types of items by the user can be accurately predicted, to improve overall prediction precision of a model.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a distinguishing manner that is used when objects having a same attribute are described in embodiments of this application. In addition, the terms "include", "have" and any other variants mean to cover a non-exclusive inclusion, so that a process, method, system, product, or device that includes a series of units is not necessarily limited to those units, but may include other units not expressly listed or inherent to such a process, method, product, or device.

With rapid development of computer technologies, to meet Internet access requirements of users, developers increasingly tend to present, on pages of applications, content that the users are interested in. Based on this, for a page of an application, it is usually necessary to predict which item or items displayed on the page may be tapped by a user (for example, predict which software on a page of an operating system may be tapped by a male user, or predict which commodity on a page of shopping software may be tapped by a student), that is, predict a behavior of the user on the page, so as to modify an item that needs to be presented on the page, and recommend an item that the user is interested in.

Currently, a probability of tapping an item on the page of the application by the user may be predicted by using a neural network model of the AI technology. Specifically, a neural network model provided in a related technology may include two branches. A first branch may be referred to as a first model, and a second branch may be referred to as a second model. Therefore, when the behavior of the user needs to be predicted by using the neural network model, information such as attribute information (for example, a name, an age, and a gender of a student) of the user and attribute information (for example, types, prices, and functions of some commodities) of items may be used as an input of the model, so that the first model may perform a linear operation on the input information, and the second model may perform a nonlinear operation on the input information. In this way, based on results of the two models, a probability of tapping each item by the user may be obtained.

In the linear operation process, the first model may implement explicit interaction between input information (features). The first model "remembers" some common information (feature) combinations (that is, in the linear operation process, the first model mainly focuses a relationship between some items that frequently appear and the user). In the nonlinear operation process, the second model may implement implicit interaction between input information (features). The second model may find some rare or uncommon information combinations (that is, in the nonlinear operation process, the second model mainly focuses a relationship between some items that almost never appear and the user). Therefore, when the neural network model in the related technology implements information interaction in this manner, efficiency is usually low. In other words, the model does not pay enough attention to a relationship between a remaining item other than the two types of items and the user. Although the neural network model can accurately predict probabilities of tapping the two types of items by the user, a probability of tapping the remaining item by the user cannot be accurately predicted. Therefore, overall prediction precision of the neural network model is low.

Further, in the neural network model provided in the related technology, due to a limitation of a structure of the first model, the first model cannot fully implement information interaction, and an order of information finally obtained through interaction is usually not high enough (for example, three linear layers connected in series are usually disposed in the first model, three linear operations may be sequentially implemented, and an order of finally obtained information is usually of three orders). Because the information usually may be used to determine final prediction results of the model, namely, probabilities of tapping some items output by the model by the user, accuracy of these prediction results is not high enough.

Further, in the neural network model provided in the related technology, the first model and the second model are usually models of a specific type, and serve only some specific service scenarios. Generalization performance of the models is insufficient.

Further, the neural network model provided in the related technology is obtained through training based on a conventional model training manner. To be specific, parameter update of the entire model is guided as a whole, and parameters of different branches in the model cannot be separately updated. Consequently, performance of the neural network model obtained through training is poor.

To resolve the foregoing problem, embodiments of this application provide an item recommendation method. The method may be implemented with reference to an artificial intelligence (AI) technology. The AI technology is a technical discipline that uses digital computers or machines controlled by digital computers to simulate, extend, and expand human intelligence. In the AI technology, an optimal result is obtained by perceiving an environment, obtaining knowledge, and using the knowledge. In other words, the artificial intelligence technology is a branch of computer science, and seeks to learn essence of intelligence and produce a new intelligent machine that can react in a way similar to artificial intelligence. Using artificial intelligence to process data is a common application manner of artificial intelligence.

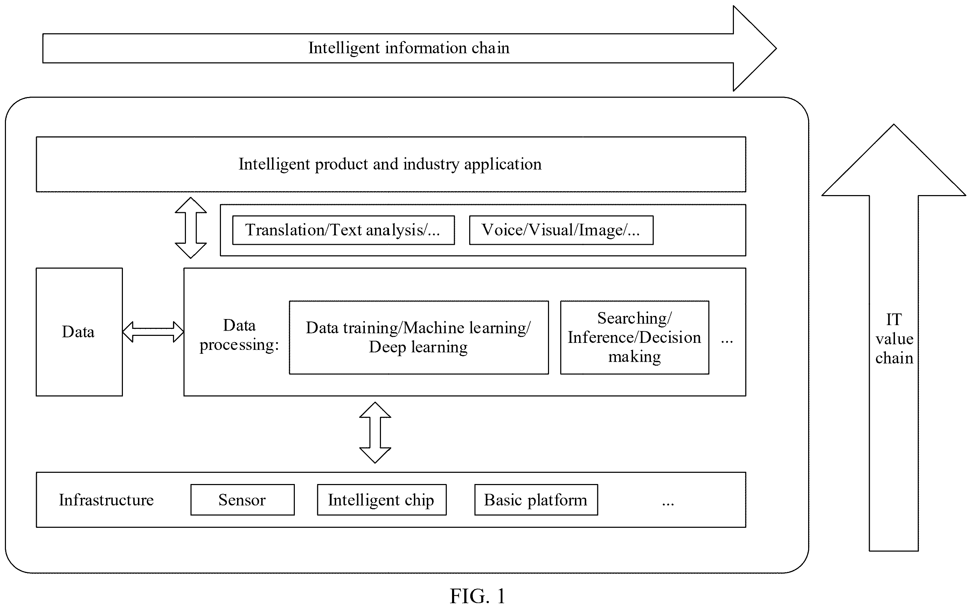

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a voice, and a text, further relates to Internet of things data of a conventional device, and includes service data of an existing system and perception data such as force, a displacement, a liquid level, a temperature, and humidity.

(3) Data processing

The data processing usually includes manners such as data training, machine learning, deep learning, searching, inference, and decision making.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control policy. A typical function is searching and matching.
Decision making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capabilities may be an algorithm or a general system, for example, translation, text analysis, computer vision processing, voice recognition, and image recognition.

(5) Intelligent product and industry application

The intelligent product and industry application are a product and application of the artificial intelligence system in various fields, and are encapsulation of the overall artificial intelligence solution and product implementation of intelligent information decision making, to implement final application. Application fields of the intelligent products and industry application mainly include: intelligent terminals, intelligent transportation, intelligent health care, autonomous driving, smart cities, and the like.
The following describes several application scenarios of this application.

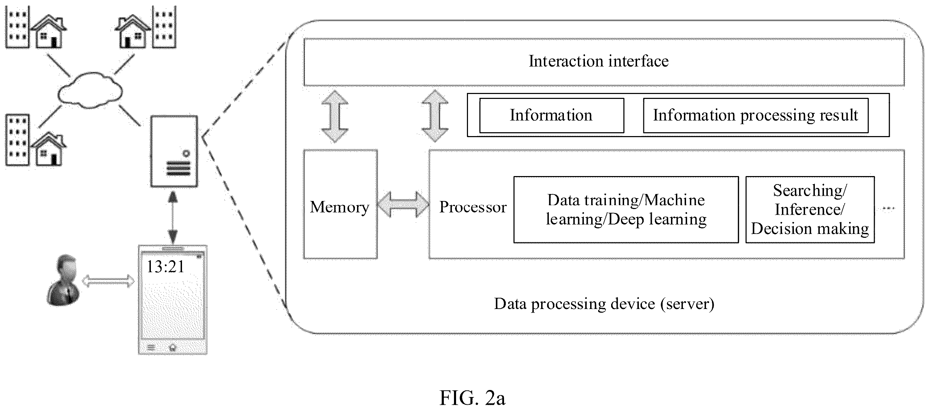

FIG. 2a is a diagram of a structure of an item recommendation system according to an embodiment of this application. The item recommendation system includes user equipment and a data processing device. The user equipment includes a mobile phone, a personal computer, an information processing center, or another intelligent terminal. The user equipment is an initiator of item recommendation, and is used as an initiator of an item recommendation request. Generally, a user initiates a request by using the user equipment.
The data processing device may be a device or a server that has a data processing function, for example, a cloud server, a network server, an application server, or a management server. The data processing device receives the item recommendation request from the intelligent terminal through an interaction interface, and then performs information processing in a manner like machine learning, deep learning, searching, inference, and decision making by using a memory that stores data and a processor that processes data. The memory in the data processing device may be a general name, and includes a local storage and a database that stores historical data. The database may be on the data processing device, or may be on another network server.

In the item recommendation system shown in FIG. 2a, the user equipment may receive an instruction of the user. For example, the user equipment may obtain information entered/selected by the user, and then initiate a request to the data processing device, so that the data processing device performs item recommendation application for the information obtained by the user equipment, to obtain a processing result for the information. For example, the user equipment may obtain information (which may include attribute information of the user, attribute information of items, attribute information of an application used to present the items, and the like) entered by the user, and then initiate an information processing request to the data processing device, so that the data processing device performs item recommendation-based processing on the information, to obtain a processing result of the information, namely, probabilities of tapping items by the user. These probabilities may be used to determine which items can be finally recommended to the user (for example, some items with higher probabilities are recommended to the user).

In FIG. 2a, the data processing device may perform the item recommendation method in embodiments of this application.

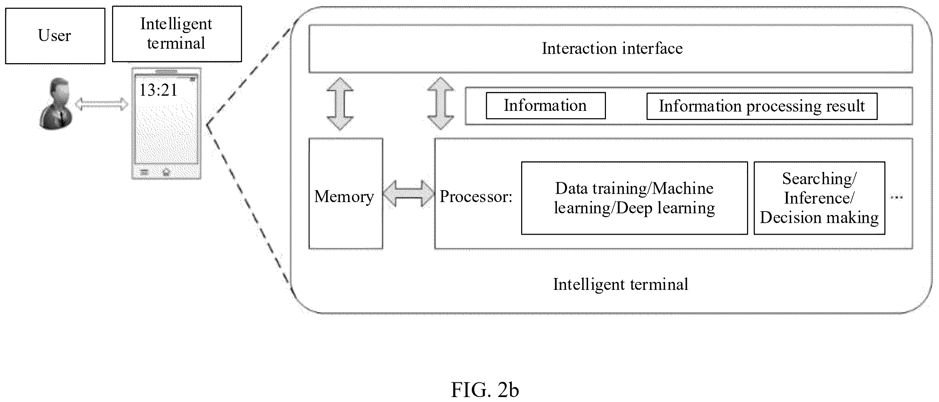

FIG. 2b is another diagram of a structure of an item recommendation system according to an embodiment of this application. In FIG. 2b, user equipment is directly used as a data processing device. The user equipment can directly obtain an input from a user, and the input is directly processed by hardware of the user equipment. A specific process is similar to that in FIG. 2a. For details, refer to the foregoing descriptions. Details are not described herein again.

In the item recommendation system shown in FIG. 2b, the user equipment may receive an instruction of the user. For example, the user equipment may obtain information selected by the user from the user equipment, and then the user equipment performs item recommendation-based processing on the information, to obtain a processing result for the information, namely, probabilities of tapping items by the user. These probabilities may be used to determine which items can be finally recommended to the user (for example, some items with higher probabilities are recommended to the user).

In FIG. 2b, the user equipment may perform the item recommendation method in embodiments of this application.

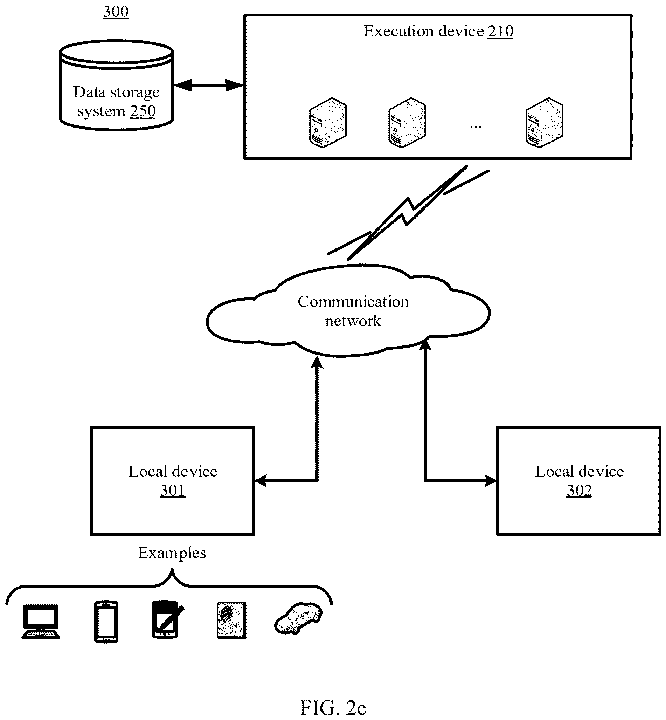

FIG. 2c is a diagram of an item recommendation-related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform image processing application on an image by using a final model that is obtained through data training or learning, to obtain a corresponding processing result.

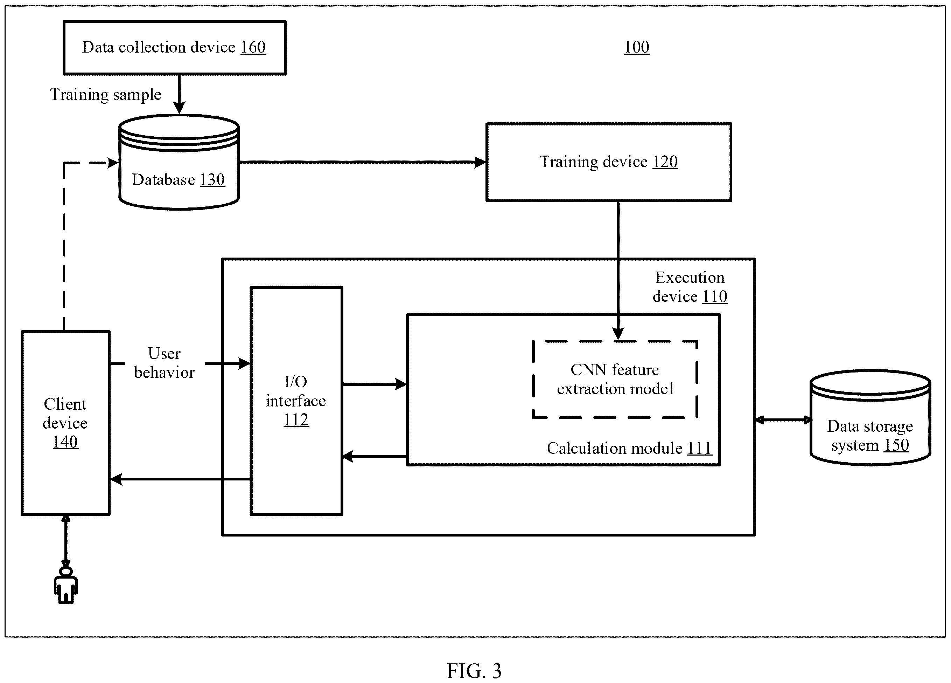

FIG. 3 is a diagram of an architecture of a system 100 according to an embodiment of this application. In FIG. 3, an execution device 110 is provided with an input/output (input/output, I/O) interface 112, configured to exchange data with an external device. A user may input data to the I/O interface 112 through a client device 140. The input data in embodiments of this application may include: each to-be-scheduled task, a resource that can be invoked, and another parameter.

In a process in which the execution device 110 preprocesses the input data, or in a process in which a calculation module 111 of the execution device 110 performs related processing such as computing (for example, performs function implementation of a neural network in this application), the execution device 110 may invoke data, code, and the like in a data storage system 150 for corresponding processing, and may also store, into the data storage system 150, data, instructions, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data, where the corresponding target models/rules may be used to achieve the objectives or complete the tasks, so as to provide required results for the user. The training data may be stored in a database 130, and is from a training sample collected by a data collection device 160.

In a case shown in FIG. 3, the user may manually provide the input data. The manual provision may be performed on an interface provided by the I/O interface 112. In another case, the client device 140 may automatically send the input data to the I/O interface 112. If it is required that the client device 140 needs to obtain authorization from the user to automatically send the input data, the user may set corresponding permission on the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete calculation work of the calculation module 111. The chip may alternatively be disposed in the training device 120 shown in FIG. 3, to complete training work of the training device 120 and output the target models/rules.

The neural network processing unit NPU is mounted to a host central processing unit (CPU) (host CPU) as a coprocessor, and the host CPU assigns a task. A core part of the NPU is an operation circuit, and a controller controls the operation circuit to extract data in a memory (a weight memory or an input memory) and perform an operation.

In some implementations, the operation circuit includes a plurality of processing engines (PEs) inside. In some implementations, the operation circuit is a two-dimensional systolic array. The operation circuit may alternatively be a one-dimensional systolic array or another electronic circuit that can perform mathematical operations such as multiplication and addition. In some implementations, the operation circuit is a general-purpose matrix processor.

For example, it is assumed that there is an input matrix A, a weight matrix B, and an output matrix C. The operation circuit fetches data corresponding to the matrix B from the weight memory and buffers the data on each PE in the operation circuit. The operation circuit fetches data of the matrix A from the input memory, to perform a matrix operation on the matrix B, and stores an obtained partial result or an obtained final result of the matrix in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling, batch normalization, or local response normalizationat a non-convolutional/non-FC layer in a neural network.

In some implementations, the vector calculation unit can store processed output vectors into a unified memory. For example, the vector calculation unit may apply a nonlinear function to an output, for example, vectors whose values are accumulated, of the operation circuit to generate an activation value. In some implementations, the vector calculation unit generates a normalized value, a combined value, or both a normalized value and a combined value. In some implementations, the processed output vector can be used as an activation input to the operation circuit, for example, used at a subsequent layer of the neural network.

The unified memory is configured to store input data and output data.

For weight data, a direct memory access controller (DMAC) directly transfers input data from an external memory to the input memory and/or the unified memory, stores, in the weight memory, weight data in the external memory, and stores, in the external memory, data in the unified memory.

A bus interface unit (BIU) is configured to implement interaction between the host CPU, the DMAC, and an instruction fetch buffer through a bus.

The instruction fetch buffer connected to the controller is configured to store instructions used by the controller.

The controller is configured to invoke the instructions buffered in the instruction fetch buffer, to control a working process of an operation accelerator.

Usually, the unified memory, the input memory, the weight memory, and the instruction fetch buffer each are an on-chip memory. The external memory is a memory outside the NPU. The external memory may be a double data rate synchronous dynamic random access memory (DDR SDRAM), a high bandwidth memory (HBM), or another readable and writable memory.

Embodiments of this application relate to massive application of the neural network. Therefore, for ease of understanding, the following first describes related terms and related concepts such as the neural network in embodiments of this application.

(1) Neural network

The neural network may include neurons. The neuron may be an operation unit that uses $x_s$ and an intercept 1 as inputs, and an output of the operation unit may be as follows:

$$h_{W,b}(x) = f(W^T x) = f(\sum_{s=1}^{n} W_s x_s + b) \qquad (1)$$

Herein, s = 1, 2, ..., or n, n is a natural number greater than 1, $W_s$ is a weight of $x_s$, and b is a bias of the neuron. f is an activation function of the neuron, and is used to introduce a nonlinear characteristic into the neural network, to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx+b)$. From a physical layer, work at each layer of the neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operations of 1, 2, and 3 are performed by $Wx$, the operation of 4 is performed by $+b$, and the operation of 5 is performed by $a()$. The word "space" is used for expression herein because a classified object is not a single thing, but a type of thing. Space is a set of all individuals of this type of thing. W is a weight vector, and each value in the vector represents a weight value of one neuron at this layer of the neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) of all layers of a trained neural network. Therefore, a training process of the neural network is essentially a manner of learning of control of space transformation, and more specifically, learning of the weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, that is, a parameter is preconfigured for each layer of the neural network). For example, if the predicted value of the network is large, the weight vector is adjusted to decrease the predicted value until the neural network can predict the target value that is actually expected. Therefore, "how to obtain, through comparison, a difference between a predicted value and a target value" needs to be predefined. This is a loss function or an objective function. The loss function and the objective function are important equations used to measure the difference between the predicted value and the target value. The loss function is used as an example. A larger output value (loss) of the loss function indicates a larger difference. Therefore, training of the neural network is a process of minimizing the loss as much as possible.

(2) Back propagation algorithm

In the training process, the neural network may correct values of parameters in an initial neural network model by using an error back propagation (BP) algorithm, so that a reconstruction error loss of the neural network model becomes increasingly smaller. Specifically, an input signal is forward transferred until the error loss is generated in an output, and the parameters in the initial neural network model are updated through back propagation of information about the error loss, to converge the error loss. The back propagation algorithm is an error-loss-centered back propagation motion intended to obtain a parameter, for example, a weight matrix, of an optimal neural network model.

The following describes the method provided in this application from a neural network training side and a neural network application side.

The model training method provided in embodiments of this application relates to data sequence processing, and may be specifically applied to methods such as data training, machine learning, or deep learning, to perform symbolic and formalized intelligent information modeling, extraction, preprocessing, training, and the like on training data (for example, first information in the model training method provided in embodiments of this application), to finally obtain a trained neural network (for example, a first model, a second model, and a third model in the model training method provided in embodiments of this application). In addition, in the item recommendation method provided in embodiments of this application, the trained neural network may be used, and input data (for example, first information in the item recommendation method provided in embodiments of this application) may be input into the trained neural network, to obtain output data (for example, a probability of tapping an item by a user in the user behavior prediction method provided in embodiments of this application). It should be noted that, the model training method and the item recommendation method provided in embodiments of this application are inventions generated based on a same idea, or may be understood as two parts in a system, or two phases, such as a model training phase and a model application phase, of an overall procedure.

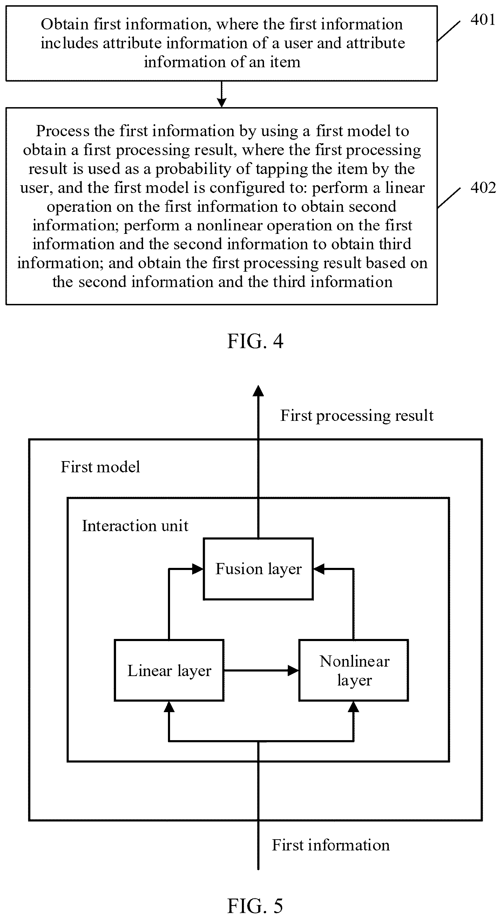

FIG. 4 is a schematic flowchart of an item recommendation method according to an embodiment of this application. As shown in FIG. 4, the method includes the following steps.

401: Obtain first information, where the first information includes attribute information of a user and attribute information of an item.

In this embodiment, when the user uses an application (for example, an operating system or software), to predict a behavior of the user on a page of the application, first information (which may also be referred to as an original feature associated with the user) associated with the user may be first obtained. The first information includes at least attribute information of the user and attribute information of an item that can be presented on the page of the application. The attribute information of the user may include information such as a name, an age, a gender, and a job of the user. The attribute information of the item may include information such as a name, a type, a function, and a price of the item. It should be noted that the attribute information of the user may also be understood as the original feature of the user, and the attribute information of the item may be understood as an original feature of the item.

In addition, the first information may further include information about an operation performed by the user on the application and attribute information of the application. The page of the application is used to provide (present) one or more items (for example, a commodity or software) for the user. The information about the operation performed by the user on the application may include a request entered by the user on the page of the application, and the like. The attribute information of the application may include a name, a type, a function, a size, and the like of the application. It should be noted that both the information about the operation performed by the user on the application and the attribute information of the application may be understood as original features of a context.

402: Process the first information by using a first model to obtain a first processing result, where the first processing result is used as a probability of tapping the item by the user, and the first model is configured to: perform a linear operation on the first information to obtain second information; perform a nonlinear operation on the first information and the second information to obtain third information; and obtain the first processing result based on the second information and the third information.

After the first information is obtained, the first model (a trained neural network model) may be obtained, and the first information is input into the first model, so that the first model processes the first information to obtain the first processing result.

Specifically, the first model may include at least one interaction unit. In this case, the first model may process the first information in a plurality of manners, to obtain the first processing result.

(1) As shown in FIG. 5 (FIG. 5 is a diagram of a structure of the first model according to an embodiment of this application), it is assumed that the first model includes only one interaction unit, and the interaction unit may include one linear layer, one nonlinear layer, and one fusion layer. An input end of the linear layer is an input end of the interaction unit, a first input end of the nonlinear layer is the input end of the interaction unit, a first output end of the linear layer is connected to a second input end of the nonlinear layer, a second output end of the linear layer is connected to an input end of the fusion layer, an output end of the nonlinear layer is connected to the input end of the fusion layer, and an output end of the fusion layer is an output end of the interaction unit.

In this case, the first information is input to the interaction unit in the first model, and both the linear layer in the interaction unit and the nonlinear layer in the interaction unit can receive the first information. Then, the linear layer may perform a linear operation on the first information to obtain a linear operation result (namely, the second information) of the linear layer, and input the linear operation result of the linear layer to the nonlinear layer and the fusion layer. A process of the linear operation is shown in the following formula:

$$h_o = w_0 x_l + b_0 \tag{2}$$

In the formula, $x_l$ is the first information, $w_0$ and $b_0$ are parameters of the linear layer (namely, a weight and a bias of the linear layer), and $h_o$ is the linear operation result of the linear layer.

Then, the nonlinear layer may perform a nonlinear operation on the first information and the linear operation result of the linear layer, to obtain a nonlinear operation result (namely, the third information) of the nonlinear layer, and input the nonlinear operation result of the nonlinear layer to the fusion layer. A process of the nonlinear operation is shown in the following formula:

$$h_1 = h_o * \sigma(w_1 x_l + b_1) \tag{3}$$

In the formula, $w_1$ and $b_1$ are parameters of the nonlinear layer (namely, a weight and a bias of the nonlinear layer), $\sigma$ is an activation function (for example, ReLU, tanh, or PReLu) of a specific layer (including the nonlinear layer and the fusion layer), and $h_1$ is the nonlinear operation result of the nonlinear layer.

Finally, the fusion layer may fuse the linear operation result of the linear layer and the nonlinear operation result of the nonlinear layer. A fusion result (namely, fourth information) may be directly used as an output of the interaction unit, namely, an output of the first model, namely, the first processing result of the first model for the first information. A fusion process is shown in the following formula:

$$x_{l+1} = \sigma(w_2^0 * h_o + w_2^1 * h_1) \qquad (4)$$

In the formula, $w_2^0$ and $w_2^1$ are parameters of the fusion layer (namely, weights used to implement weighted summation at the fusion layer), and $x_{l+1}$ is the output of the interaction unit, namely, the first processing result output by the first model. It should be noted that the interaction unit may be considered as a 2-order interaction unit, and the first information is considered as 1-order information (a 1-order feature), and the first processing result output by the first model is 2-order information (a 2-order feature).

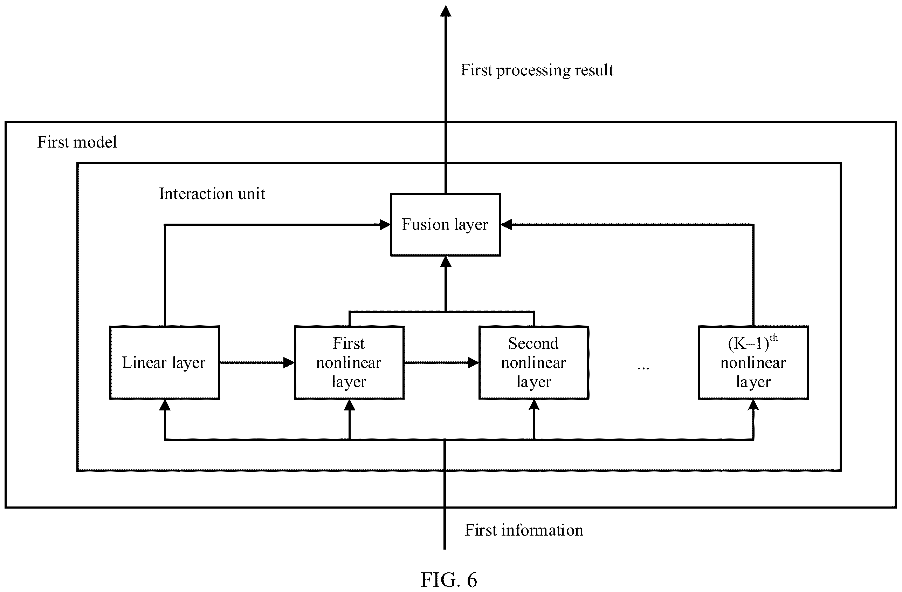

(2) As shown in FIG. 6 (FIG. 6 is another diagram of a structure of the first model according to an embodiment of this application), it is assumed that the first model includes only one interaction unit. The interaction unit may include one linear layer, K-1 nonlinear layers (K is a positive integer greater than or equal to 3), and one fusion layer. An input end of the linear layer is an input end of the interaction unit, first input ends of the K-1 nonlinear layers are all input ends of the interaction unit, a first output end of the linear layer is connected to a second input end of a first nonlinear layer, a first output end of the first nonlinear layer is connected to a second input end of a second nonlinear layer, ..., a first output end of a (K-2)$^{th}$ nonlinear layer is connected to a second input end of a (K-1)$^{th}$ nonlinear layer, a second output end of the linear layer is connected to an input end of the fusion layer, second output ends of the K-1 nonlinear layers are all connected to the input end of the fusion layer, and an output end of the fusion layer is an output end of the interaction unit.

In this case, the first information is input to the interaction unit in the first model, and both the linear layer in the interaction unit and the K-1 nonlinear layers in the interaction unit can receive the first information. Then, the linear layer may perform a linear operation on the first information to obtain a linear operation result (namely, the second information) of the linear layer, and input the linear operation result of the linear layer to the first nonlinear layer and the fusion layer. A process of the linear operation is shown in Formula (2), and details are not described herein again.

Then, the first nonlinear layer may perform a nonlinear operation on the first information and the linear operation result of the linear layer, to obtain a nonlinear operation result of the first nonlinear layer (namely, the third information), and input the nonlinear operation result of the first nonlinear layer to the second nonlinear layer and the fusion layer. Then, the second nonlinear layer may perform a nonlinear operation on the first information and the nonlinear operation result of the first nonlinear layer, to obtain a nonlinear operation result of the second nonlinear layer, and input the nonlinear operation result of the second nonlinear layer to the third nonlinear layer and the fusion layer, ..., and the (K-1)$^{th}$ nonlinear layer may perform a nonlinear operation on the first information and a nonlinear operation result of the (K-2)$^{th}$ nonlinear layer, to obtain a nonlinear operation result of the (K-1)$^{th}$ nonlinear layer, and input the nonlinear operation result of the (K-1)$^{th}$ nonlinear layer to the fusion layer. A nonlinear operation process of the K-1 nonlinear layers is shown in the following formula:

$$h_1 = h_o * \sigma(w_1 x_l + b_1)$$
$$\ldots$$
$$h_j = h_{j-1} * \sigma(w_j x_l + b_j) \qquad (5)$$
$$\ldots$$
$$h_{K-1} = h_{K-2} * \sigma(w_{K-1} x_l + b_{K-1})$$

In the formula, $h_{j-1}$ is a nonlinear operation result of a (j-1)$^{th}$ nonlinear layer, $h_j$ is a nonlinear operation result of a j$^{th}$ nonlinear layer, $w_j$ and $b_j$ are parameters of the j$^{th}$ nonlinear layer, and j=1, ..., or K-1.

Finally, the fusion layer may fuse the linear operation result of the linear layer and nonlinear operation results of the K-1 nonlinear layers, and a fusion result may be directly used as an output of the interaction unit, namely, an output of the first model, namely, the first processing result of the first model for the first information. A fusion process is shown in the following formula:

$$x_{l+1} = \sigma\left(w_{K-1}^0 * h_o + \sum_{j=1}^{j=K-1} w_{K-1}^j * h_j\right) \qquad (6)$$

In the formula, $w_{K-1}^0$ and $w_{K-1}^j$ are parameters of the fusion layer (namely, weights used to implement weighted summation at the fusion layer), and $x_{l+1}$ is the output of the interaction unit, namely, the first processing result output by the first model. It should be noted that the interaction unit may be considered as a K-order interaction unit, and the first information is considered as 1-order information (a 1-order feature), and the first processing result output by the first model is K-order information (a K-order feature).

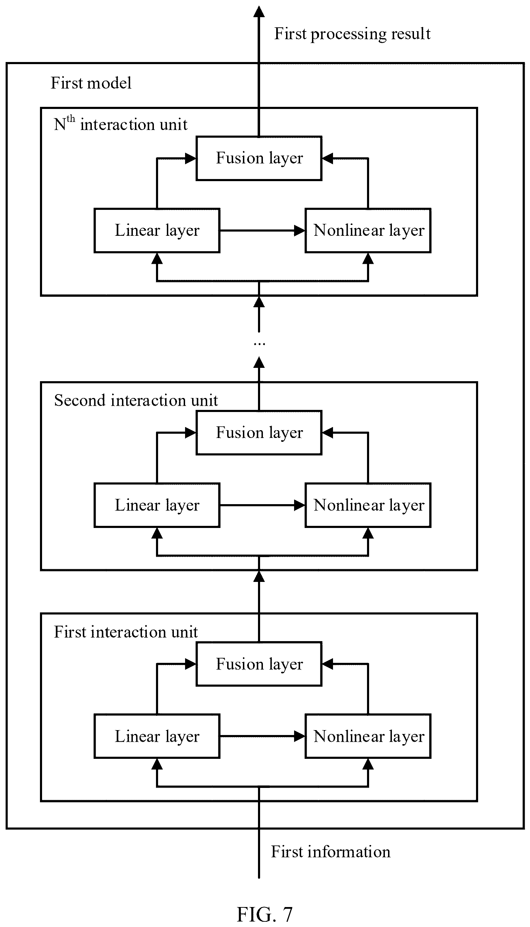

(3) As shown in FIG. 7 (FIG. 7 is another diagram of a structure of the first model according to an embodiment of this application), it is assumed that the first model includes N interaction units connected in series (N is a positive integer greater than or equal to 2). For any one of the N interaction units, that is, for an $i^{th}$ interaction unit (i=1, ..., or N), the $i^{th}$ interaction unit may include one linear layer, one nonlinear layer, and one fusion layer. An input end of the linear layer of the $i^{th}$ interaction unit is an input end of the $i^{th}$ interaction unit, a first input end of the nonlinear layer of the $i^{th}$ interaction unit is an input end of the $i^{th}$ interaction unit, a first output end of the linear layer of the $i^{th}$ interaction unit is connected to a second input end of the nonlinear layer of the $i^{th}$ interaction unit, a second output end of the linear layer of the $i^{th}$ interaction unit is connected to an input end of the fusion layer of the $i^{th}$ interaction unit, an output end of the nonlinear layer of the $i^{th}$ interaction unit is connected to the input end of the fusion layer of the $i^{th}$ interaction unit, and an output end of the fusion layer of the $i^{th}$ interaction unit is an output end of the $i^{th}$ interaction unit. For a remaining interaction unit other than the $i^{th}$ interaction unit, an internal structure of the remaining interaction unit is also the same, and details are not described herein again.

In this case, the first information is input to a first interaction unit in the first model, and the first information is referred to as an input of the first interaction unit below. After receiving the input of the first interaction unit, the first interaction unit may perform the following operations on the input of the first interaction unit: A linear layer of the first interaction unit may perform a linear operation on the input of the first interaction unit, to obtain a linear operation result (namely, the second information) of the linear layer of the first interaction unit, and input the linear operation result of the linear layer of the first interaction unit to a nonlinear layer of the first interaction unit and a fusion layer of the first interaction unit. A process in which the first interaction unit performs the linear operation is shown in Formula (2), and details are not described herein again.

Then, the nonlinear layer of the first interaction unit may perform a nonlinear operation on the input of the first interaction unit and the linear operation result of the linear layer of the first interaction unit, to obtain a nonlinear operation result (namely, the third information) of the nonlinear layer of the first interaction unit, and input the nonlinear operation result of the nonlinear layer of the first interaction unit to the fusion layer of the first interaction unit. A process in which the first interaction unit performs the nonlinear operation is shown in Formula (3), and details are not described herein again.

Then, the fusion layer of the first interaction unit may fuse the linear operation result of the linear layer of the first interaction unit and the nonlinear operation result of the nonlinear layer of the first interaction unit. A fusion result (namely, the fourth information) of the fusion layer of the first interaction unit may be directly used as an output of the first interaction unit, and be input to a second interaction unit, that is, used as an input of the second interaction unit. A process in which the first interaction unit performs fusion is shown in Formula (4), and details are not described herein again.

After the input of the second interaction unit is received, operations performed by the second interaction unit on the input of the second interaction unit are similar to the operations performed by the first interaction unit on the input of the first interaction unit, and details are not described herein again. Similarly, operations performed by a third interaction unit on an input of the third interaction unit, ..., and operations performed by an $N^{th}$ interaction unit on an input of the $N^{th}$ interaction unit are all similar to the operations performed by the first interaction unit on the input of the first interaction unit, and details are not described herein again. It may be understood that a fusion result obtained by a fusion layer of the $N^{th}$ interaction unit, namely, an output of the $N^{th}$ interaction unit, may be used as an output of the first model, namely, the first processing result of the first model for the first information.

It should be noted that each of the N interaction units may be considered as a 2-order interaction unit, the first information is considered as 1-order information (a 1-order feature), and the first processing result output by the first model is $2^N$-order information (a $2^N$-order feature).

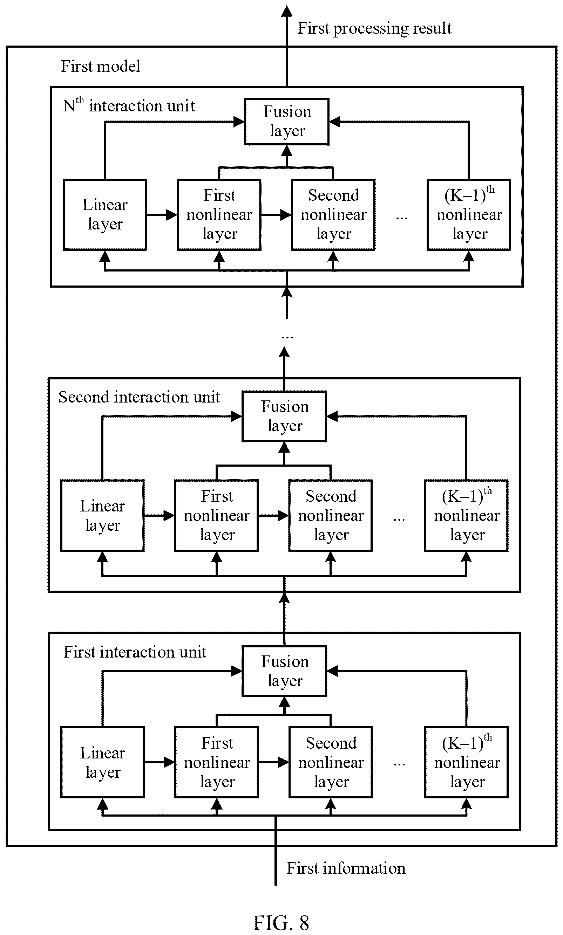

(4) As shown in FIG. 8 (FIG. 8 is another diagram of a structure of the first model according to an embodiment of this application), it is assumed that the first model includes N interaction units connected in series (N is a positive integer greater than or equal to 2). For any one of the N interaction units, that is, for an $i^{th}$ interaction unit (i=1, ..., or N), the $i^{th}$ interaction unit may include one linear layer, K-1 nonlinear layers (K is a positive integer greater than or equal to 3), and one fusion layer. An input end of the linear layer of the $i^{th}$ interaction unit is an input end of the $i^{th}$ interaction unit, first input ends of the K-1 nonlinear layers of the $i^{th}$ interaction unit are all input ends of the $i^{th}$ interaction unit, a first output end of the linear layer of the $i^{th}$ interaction unit is connected to a second input end of a first nonlinear layer of the $i^{th}$ interaction unit, a first output end of the first nonlinear layer of the $i^{th}$ interaction unit is connected to a second input end of a second nonlinear layer of the $i^{th}$ interaction unit, ..., a first output end of a $(K-2)^{th}$ nonlinear layer of the $i^{th}$ interaction unit is connected to a second input end of a $(K-1)^{th}$ nonlinear layer of the $i^{th}$ interaction unit, a second output end of the linear layer of the $i^{th}$ interaction unit is connected to an input end of the fusion layer of the $i^{th}$ interaction unit, second output ends of the K-1 nonlinear layers of the $i^{th}$ interaction unit are connected to the input end of the fusion layer of the $i^{th}$ interaction unit, and an output end of the fusion layer of the $i^{th}$ interaction unit is an output end of the $i^{th}$ interaction unit. For a remaining interaction unit other than the $i^{th}$ interaction unit, an internal structure of the remaining interaction unit is also the same, and details are not described herein again.

In this case, the first information is input to a first interaction unit in the first model, and the first information is referred to as an input of the first interaction unit below. After receiving the input of the first interaction unit, the first interaction unit may perform the following operations on the input of the first interaction unit: A linear layer of the first interaction unit may perform a linear operation on the input of the first interaction unit, to obtain a linear operation result (namely, the second information) of the linear layer of the first interaction unit, and input the linear operation result of the linear layer of the first interaction unit to a first nonlinear layer of the first interaction unit and a fusion layer of the first interaction unit. A process in which the first interaction unit performs the linear operation is shown in Formula (2), and details are not described herein again.

Then, the first nonlinear layer of the first interaction unit may perform a nonlinear operation on the input of the first interaction unit and the linear operation result of the linear layer of the first interaction unit, to obtain a nonlinear operation result (namely, the third information) of the first nonlinear layer of the first interaction unit, and input the nonlinear operation result of the first nonlinear layer of the first interaction unit to a second nonlinear layer and the fusion layer of the first interaction unit. Then, the second nonlinear layer of the first interaction unit may perform a nonlinear operation on the input of the first interaction unit and the nonlinear operation result of the first nonlinear layer of the first interaction unit, to obtain a nonlinear operation result of the second nonlinear layer of the first interaction unit, and input the nonlinear operation result of the second nonlinear layer of the first interaction unit to a third nonlinear layer and the fusion layer of the first interaction unit, ..., and a $(K-1)^{th}$ nonlinear layer of the first interaction unit may perform a nonlinear operation on the input of the first interaction unit and a nonlinear operation result of a $(K-2)^{th}$ nonlinear layer of the first interaction unit, to obtain a nonlinear operation result of the $(K-1)^{th}$ nonlinear layer of the first interaction unit, and input the nonlinear operation result of the $(K-1)^{th}$ nonlinear layer of the first interaction unit to the fusion layer of the first interaction unit. A process in which the first interaction unit performs the nonlinear operation is shown in Formula (5), and details are not described herein again.

Then, the fusion layer of the first interaction unit may fuse the linear operation result of the linear layer of the first interaction unit and nonlinear operation results of the K-1 nonlinear layers of the first interaction unit. A fusion result of the fusion layer of the first interaction unit may be directly used as an output of the first interaction unit, and be input to a second interaction unit, that is, used as an input of the second interaction unit. A process in which the first interaction unit performs fusion is shown in Formula (6), and details are not described herein again.

After the input of the second interaction unit is received, operations performed by the second interaction unit on the input of the second interaction unit are similar to the operations performed by the first interaction unit on the input of the first interaction unit, and details are not described herein again. Similarly, operations performed by a third interaction unit on an input of the third interaction unit, ..., and operations performed by an $N^{th}$ interaction unit on an input of the $N^{th}$ interaction unit are all similar to the operations performed by the first interaction unit on the input of the first interaction unit, and details are not described herein again. It may be understood that a fusion result obtained by a fusion layer of the $N^{th}$ interaction unit, namely, an output of the $N^{th}$ interaction unit, may be used as an output of the first model, namely, the first processing result of the first model for the first information.

It should be noted that each of the N interaction units may be considered as a K-order interaction unit, the first information is considered as 1-order information (a 1-order feature), and the first processing result output by the first model is K^N-order information (a K^N-order feature).

After the first processing result output by the first model is obtained, the first processing result may be directly used as the probability of tapping, by the user, the item that can be presented on the page of the application. In this case, the probability may be used to determine an item recommended to the user.

It should be understood that, for the case (1) and the case (3), for any interaction unit, that is, for the $i^{th}$ interaction unit, the linear operation result of the linear layer of the $i^{th}$ interaction unit may be considered as the "linear operation result of the $i^{th}$ interaction unit", and the nonlinear operation result of the nonlinear layer of the $i^{th}$ interaction unit may be considered as the "nonlinear operation result of the $i^{th}$ interaction unit".

It should be further understood that, for the case (2) and the case (4), for any interaction unit, that is, for the $i^{th}$ interaction unit, the linear operation result of the linear layer of the $i^{th}$ interaction unit may be considered as the "linear operation result of the $i^{th}$ interaction unit", the nonlinear operation result of the first nonlinear layer of the $i^{th}$ interaction unit to the nonlinear operation result of the $(K-2)^{th}$ nonlinear layer of the $i^{th}$ interaction unit may be considered as the "nonlinear operation results of the $i^{th}$ interaction unit", and the nonlinear operation result of the second nonlinear layer of the $i^{th}$ interaction unit to the nonlinear operation result of the $(K-1)^{th}$ nonlinear layer of the $i^{th}$ interaction unit may be considered as "new nonlinear operation results of the $i^{th}$ interaction unit".

It should be further understood that, in the case (3) and the case (4), the N interaction units each including a same quantity of nonlinear layers is used as an example for description. In actual application, in the N interaction units, different interaction units may include a same quantity of nonlinear layers, or may include different quantities of nonlinear layers.

In embodiments of this application, after the first information including the attribute information of the user and the attribute information of the item is obtained, the first information may be input to the first model for processing, to obtain the first processing result. The first processing result may be used to determine the probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

Further, the first model may include N interaction units, each interaction unit may include one linear layer and at least one nonlinear layer, and the N interaction units are in a series connection relationship. The N interaction units are used to process the first information, so that linear operations and nonlinear operations of a specific quantity may be implemented on the first information. The obtained first processing result is high-order information (namely, $2^N$-order information or $K^N$ information), and the information is used as or used to determine a final prediction result, namely, the probability of tapping each item by the user. This has high accuracy.

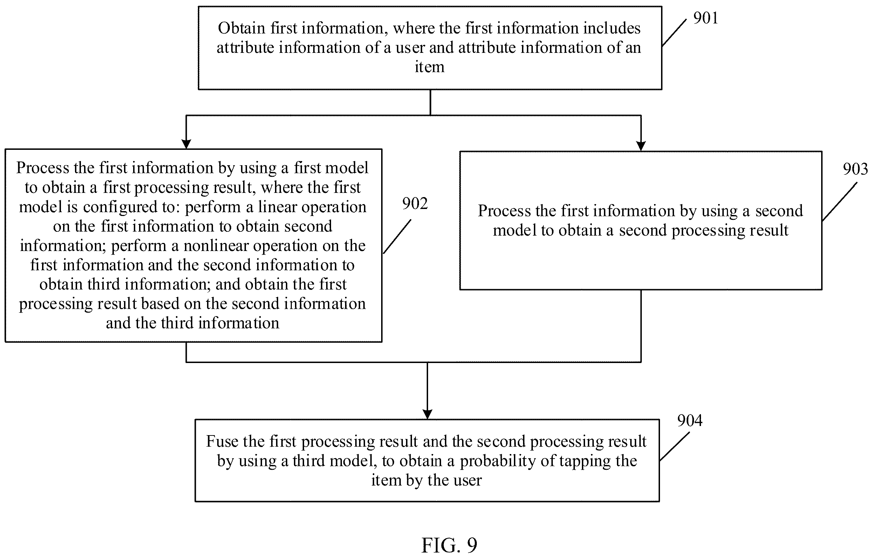

FIG. 9 is another schematic flowchart of an item recommendation method according to an embodiment of this application. As shown in FIG. 9, the method includes the following steps.

901: Obtain first information, where the first information includes attribute information of a user and attribute information of an item.

902: Process the first information by using a first model to obtain a first processing result, where the first model is configured to: perform a linear operation on the first information to obtain second information; perform a nonlinear operation on the first information and the second information to obtain third information; and obtain the first processing result based on the second information and the third information.

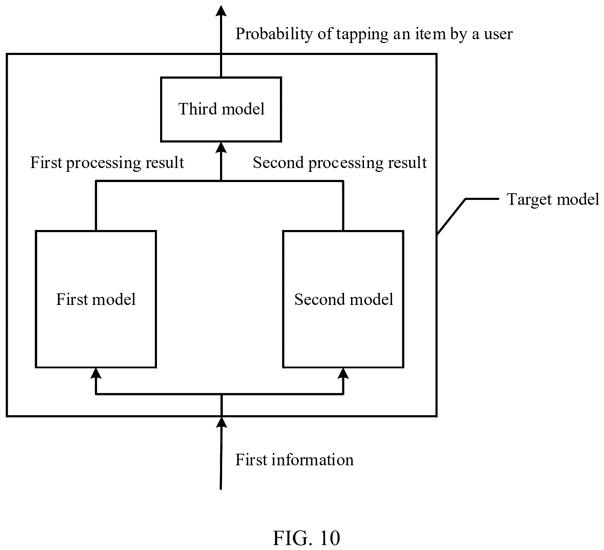

In this embodiment, a target model is provided. As shown in FIG. 10 (FIG. 10 is a diagram of a structure of the target model according to an embodiment of this application), the target model includes the first model (which may be the first model shown in FIG. 5, FIG. 6, FIG. 7, or FIG. 8), a second model, and a third model. The three models are all trained neural network models. The first model and the second model are used as two parallel branches, an output end of the first model and an output end of the second model are both connected to an input end of the third model, an input end of the first model and an input end of the second model may be configured to receive the first information, and an output end of the third model may output a probability of tapping, by the user, an item that can be presented on a page of an application.

For descriptions of step 901 and step 902, refer to related descriptions of step 401 and step 402 in embodiments shown in FIG. 4. It should be noted that a difference between step 902 and step 402 lies in that the first processing result in step 402 may be directly used as the probability of tapping, by the user, the item that can be presented on the page of the application, and the first processing result in step 902 may be used to indirectly obtain the probability of tapping, by the user, the item that can be presented on the page of the application.

903: Process the first information by using a second model to obtain a second processing result.

After the first information is obtained, when the first information is input into the first model, the first information may be further input into the second model, so that the second model processes the first information to obtain the second processing result. The second model may be at least one of the following: a multilayer perceptron, a convolutional network, an attention network, a Squeeze-and-Excitation network, or a model that is the same as the first model.

904: Fuse the first processing result and the second processing result by using a third model, to obtain the probability of tapping the item by the user.

After the first model obtains the first processing result and the second model obtains the second processing result, the first model may send the first processing result to the third model, and the second model may send the second processing result to the third model, so that the third model fuses the first processing result and the second processing result (for example, performs weighted summation), and a result obtained through fusion is the probability of tapping, by the user, the item that can be presented on the page of the application. In this case, the probability may be used to determine the item recommended to the user.

It should be understood that in this embodiment, that the target model including only two branches (the first model and the second model) is described as an example, and a quantity of branches included in the target model in this application is not limited.

In addition, performance, presented for a plurality of datasets, of neural network models provided in embodiments of this application may be further compared with that of neural network models provided in related technologies. A comparison result is shown in Table 1.

**Table 1**

| Model | Dataset 1 | Dataset 2 | Dataset 3 | Dataset 4 |
|---|---|---|---|---|
| Related technology 1 | 0.8022 | 0.7613 | 0.9434 | 0.9671 |
| Related technology 2 | 0.8060 | 0.7625 | 0.9522 | 0.9788 |
| Related technology 3 | 0.8056 | 0.7603 | 0.9465 | 0.9749 |
| Related technology 4 | 0.8136 | 0.7646 | 0.9673 | 0.9835 |
| Related technology 5 | 0.8137 | 0.7630 | 0.9699 | 0.9841 |
| Related technology 6 | 0.8138 | 0.7657 | 0.9685 | 0.9842 |
| Related technology 7 | 0.8139 | 0.7647 | 0.9687 | 0.9839 |
| Related technology 8 | 0.8141 | 0.7649 | 0.9691 | 0.9845 |
| Embodiment 1 of this application | 0.8155 | 0.7667 | 0.9720 | 0.9895 |
| Embodiment 2 of this application | 0.8145 | 0.7664 | 0.9711 | 0.9883 |

It should be noted that the model provided in "Embodiment 1 of this application" in Table 1 is the target model, and the model provided in "Embodiment 2 of this application" is only the first model. It can be learned from Table 1 that the models provided in embodiments of this application can achieve best performance, and show advantages of embodiments of this application. The target model achieves best effect, and the first model achieves suboptimal effect. This indicates that both the first model and the target model provided in embodiments of this application can improve accuracy of click-through rate estimation.

Further, the target model provided in embodiments of this application is applicable to various service scenarios, and can achieve noticeable effect and obtain user recognition. Online effect of the target model is shown in Table 2.

**Table 2**

| Service scenario | Online effect |
|---|---|
| XX music: 30 songs every day for daily recommendation | Full launch, where an average quantity of playing times per subscriber increases by 7.8%, and average playing duration per subscriber increases by 9.0% |
| XX music: recommended playlist for public square dancing | A/B traffic launch, where an average quantity of playing times per subscriber increases by about 2%. |
| XX browser: information flow recommendation | A/B traffic launch, where a click-through rate increases by 4.1% on average. |
| XX browser: search advertisements | A/B traffic launch, where a download rate increases by 1.8%, and ecpm increases by 2.8%. |
| XXPPS advertisement | A/B traffic launch, where a click-through rate increases by 1.5% on average. |

In embodiments of this application, after the first information including the attribute information of the user and the attribute information of the item is obtained, the first information may be input to the first model for processing, to obtain the first processing result. The first processing result may be used to determine the probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

Further, the first model may include N interaction units, each interaction unit may include one linear layer and a plurality of nonlinear layers, and the N interaction units are in a series connection relationship. The N interaction units are used to process the first information, so that linear operations and nonlinear operations of a specific quantity may be implemented on the first information. The obtained first processing result is high-order information (namely, 2^N-order information or K^N-order information), and the information is used as or used to determine a final prediction result, namely, the probability of tapping each item by the user. This has high accuracy.

Further, the first model and the second model in the target model may form a plurality of types of model combinations, so that the target model provides services for more service scenarios, and has high generalization performance.

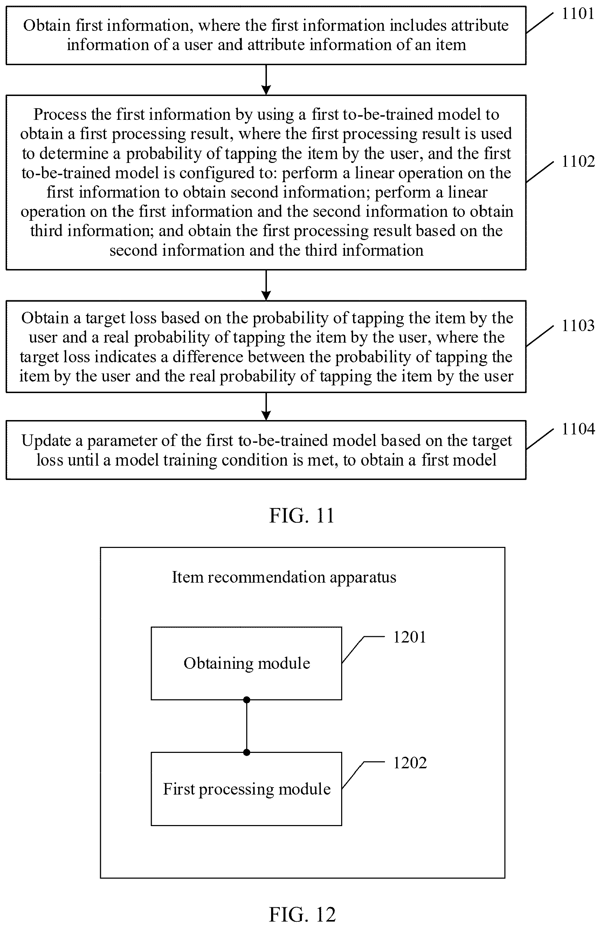

The foregoing describes in detail the item recommendation method provided in embodiments of this application. The following describes the model training method provided in embodiments of this application. FIG. 11 is a schematic flowchart of a model training method according to an embodiment of this application. As shown in FIG. 11, the method includes the following steps.

1101: Obtain first information, where the first information includes attribute information of a user and attribute information of an item.

In this embodiment, when a to-be-trained model (including at least a first to-be-trained model) needs to be trained, a batch of training data may be first obtained. The batch of training data includes the first information, and the first information includes the attribute information of the user and attribute information of an item that can be presented on a page of an application. It should be noted that a real probability of tapping, by the user, the item that can be presented on the page of the application is known (referred to as a real probability of tapping the item by the user below), and the probability is used to determine a real item recommended to the user.

In a possible implementation, the first information further includes information about an operation performed by the user on the application and attribute information of the application, and the application is used to provide the item for the user.

1102: Process the first information by using the first to-be-trained model to obtain a first processing result, where the first processing result is used to determine a probability of tapping the item by the user, and the first to-be-trained model is configured to: perform a linear operation on the first information to obtain second information; perform a nonlinear operation on the first information and the second information to obtain third information; and obtain the first processing result based on the second information and the third information.

After the first information is obtained, the first information may be input into the first to-be-trained model, so that the first to-be-trained model processes the first information to obtain the first processing result. The first processing result is used to obtain a predicted probability of tapping, by the user, the item that can be presented on the page of the application (referred to as a predicted probability of tapping the item by the user below). The probability may be used to determine a (predicted) item recommended to the user. The processing performed by the first to-be-trained model includes: performing the linear operation on the first information to obtain the second information; performing the nonlinear operation on the first information and the second information to obtain the third information; and obtaining the first processing result based on the second information and the third information.

In a possible implementation, if the to-be-trained model includes not only the first to-be-trained model, but also a second to-be-trained model and a third to-be-trained model, the first information may be further input into the second to-be-trained model, so that the second to-be-trained model processes the first information to obtain a second processing result. The second to-be-trained model is at least one of the following: a multilayer perceptron, a convolutional network, an attention network, a Squeeze-and-Excitation network, or a model that is the same as the first to-be-trained model. Then, the first processing result and the second processing result are fused by using the third to-be-trained model, and a result obtained through fusion is the predicted probability of tapping the item by the user.

In a possible implementation, the obtaining the first processing result based on the second information and the third information includes: fusing the second information and the third information to obtain fourth information; and obtaining the first processing result based on the fourth information.

In a possible implementation, the first to-be-trained model includes N interaction units, an input of an $i^{th}$ interaction unit is an output of an $(i-1)^{th}$ interaction unit, $N \geq 1$, and $i=1, ..., $ or N; and the processing the first information by using the to-be-trained first model to obtain the first processing result includes: performing a linear operation on the input of the $i^{th}$ interaction unit by using the $i^{th}$ interaction unit, to obtain a linear operation result of the $i^{th}$ interaction unit; performing a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and fusing the linear operation result of the $i^{th}$ interaction unit and the nonlinear operation result of the $i^{th}$ interaction unit by using the $i^{th}$ interaction unit, to obtain an output of the $i^{th}$ interaction unit, where an input of a first interaction model is the first information, a linear operation result of the first interaction model is the second information, a nonlinear operation result of the first interaction model is the third information, an output of the first interaction model is the fourth information, and an output of an $N^{th}$ interaction model is the first processing result.

In a possible implementation, the processing the first information by using the to-be-trained first model to obtain the first processing result further includes: performing a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and the fusing the linear operation result of the $i^{th}$ interaction unit and the nonlinear operation result of the $i^{th}$ interaction unit by using the $i^{th}$ interaction unit, to obtain an output of the $i^{th}$ interaction unit includes: fusing the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

1103: Obtain a target loss based on the probability of tapping the item by the user and the real probability of tapping the item by the user, where the target loss indicates a difference between the probability of tapping the item by the user and the real probability of tapping the item by the user.

After the predicted probability of tapping the item by the user is obtained, the predicted probability of tapping the item by the user and the real probability of tapping the item by the user may be calculated by using a preset first loss function, to obtain a first loss. The first loss indicates the difference between the probability of tapping the item by the user and the real probability of tapping the item by the user. In this case, if the to-be-trained model includes only the first to-be-trained model, the first loss may be directly used as the target loss.

In a possible implementation, if the to-be-trained model includes not only the first to-be-trained model, but also the second to-be-trained model and the third to-be-trained model, when the first loss is calculated, the predicted probability of tapping the item by the user and the first processing result may be calculated by using a preset second loss function, to obtain a second loss, and the predicted probability of tapping the item by the user and the second processing result are calculated by using a preset second loss function, to obtain a third loss. The second loss indicates a difference between the predicted probability of tapping the item by the user and the first processing result, and the third loss indicates a difference between the predicted probability of tapping the item by the user and the second processing result. In this case, the target loss may be constructed based on the first loss, the second loss, and the third loss (for example, the first loss, the second loss, and the third loss are added). Therefore, the target loss may indicate the difference between the probability of tapping the item by the user and the real probability of tapping the item by the user, the difference between the first processing result and the predicted probability of tapping the item by the user, and the difference between the second processing result and the predicted probability of tapping the item by the user.

1104: Update a parameter of the first to-be-trained model based on the target loss until a model training condition is met, to obtain a first model.

If the to-be-trained model includes only the first to-be-trained model, the parameter of the first to-be-trained model may be updated based on the target loss that is constructed based on only the first loss, and the first to-be-trained model whose parameter is updated continues to be trained by using a next batch of training data, until the model training condition is met (for example, the target loss reaches convergence), to obtain the first model in embodiments shown in FIG. 4.

In a possible implementation, if the to-be-trained model includes not only the first to-be-trained model, but also the second to-be-trained model and the third to-be-trained model, the parameter of the first to-be-trained model, a parameter of the second to-be-trained model, and a parameter of the third to-be-trained model may be updated based on the target loss that is constructed based on the first loss, the second loss, and the third loss. In addition, the first to-be-trained model whose parameter is updated, the second to-be-trained model whose parameter is updated, and the third to-be-trained model whose parameter is updated continue to be trained by using a next batch of training data, until the model training condition is met, to correspondingly obtain the first model, the second model, and the third model in embodiments shown in FIG. 9, namely, the target model in embodiments shown in FIG. 9.

The first model obtained through training in embodiments of this application has a capability of predicting user behavior. Specifically, after the first information including the attribute information of the user and the attribute information of the item is obtained, the first information may be input to the first model for processing, to obtain the first processing result. The first processing result may be used to determine the probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

Further, the first model obtained through training in embodiments of this application may include N interaction units, each interaction unit may include one linear layer and a plurality of nonlinear layers, and the N interaction units are in a series connection relationship. The N interaction units are used to process the first information, so that linear operations and nonlinear operations of a specific quantity may be implemented on the first information. The obtained first processing result is high-order information (namely, 2^N-order information or K^N-order information), and the information is used as or used to determine a final prediction result, namely, the probability of tapping each item by the user. This has high accuracy.

Further, the first model and the second model in the target model obtained through training in embodiments of this application may form a plurality of types of model combinations, so that the target model provides services for more service scenarios, and has high generalization performance.

Further, embodiments of this application provide a new model training manner, so that not only an overall loss can be calculated for the to-be-trained model, but also corresponding losses can be calculated for different branch models in the to-be-trained model, to indicate, based on these losses, parameters of different branches in the model to be updated in a targeted manner, so as to improve performance of a neural network model obtained through training.

The foregoing describes in detail the model training method provided in embodiments of this application. The following describes an item recommendation apparatus and a model training apparatus provided in embodiments of this application. FIG. 12 is a diagram of a structure of an item recommendation apparatus according to an embodiment of this application. As shown in FIG. 12, the apparatus includes:

an obtaining module 1201, configured to obtain first information, where the first information includes attribute information of a user and attribute information of an item; and
a first processing module 1202, configured to process the first information by using a first model to obtain a first processing result, where the first processing result is used to determine the item recommended to the user, and the first model is configured to: perform a linear operation on the first information to obtain second information; perform a nonlinear operation on the second information to obtain third information; and obtain the first processing result based on the third information.

In embodiments of this application, after the first information including the attribute information of the user and the attribute information of the item is obtained, the first information may be input to the first model for processing, to obtain the first processing result. The first processing result may be used to determine the probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

In a possible implementation, the first model is configured to: perform the linear operation on the first information to obtain the second information; perform the nonlinear operation on the first information and the second information to obtain the third information; fuse the second information and the third information to obtain fourth information; and obtain the first processing result based on the fourth information.

In a possible implementation, the apparatus further includes: a second processing module, configured to process the first information by using a second model to obtain a second processing result, where the second model is at least one of the following: a multilayer perceptron, a convolutional network, an attention network, a Squeeze-and-Excitation network, or a model that is the same as the first model; and a third processing module, configured to fuse the first processing result and the second processing result by using a third model, where a result obtained through fusion is used to determine the item recommended to the user.

In a possible implementation, the first model includes N interaction units, an input of an i-th interaction unit is an output of an (i-1)-th interaction unit, N≥1, and i=1, ..., or N; and the first processing module is configured to: perform a linear operation on the input of the i-th interaction unit by using the i-th interaction unit, to obtain a linear operation result of the i-th interaction unit; perform a nonlinear operation on the input of the i-th interaction unit and the linear operation result of the i-th interaction unit by using the i-th interaction unit, to obtain a nonlinear operation result of the i-th interaction unit; and fuse the linear operation result of the i-th interaction unit and the nonlinear operation result of the i-th interaction unit by using the i-th

interaction unit, to obtain an output of the $i^{th}$ interaction unit, where an input of a first interaction unit is the first information, a linear operation result of a first interaction model is the second information, a nonlinear operation result of the first interaction model is the third information, an output of the first interaction model is the fourth information, and an output of an $N^{th}$ interaction model is the first processing result.

In a possible implementation, the first processing module is further configured to perform a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and the first processing module is configured to fuse the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

In a possible implementation, the first information further includes information about an operation performed by the user on the application and attribute information of the application, and the application is used to provide the item for the user.

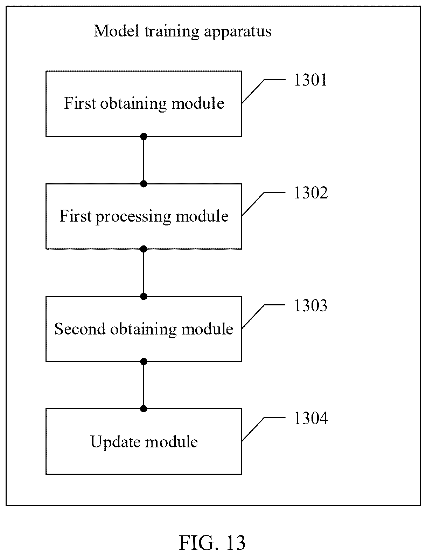

FIG. 13 is a diagram of a structure of a model training apparatus according to an embodiment of this application. As shown in FIG. 13, the apparatus includes:

a first obtaining module 1301, configured to obtain first information, where the first information includes attribute information of a user and attribute information of an item;

a first processing module 1302, configured to process the first information by using a first to-be-trained model to obtain a first processing result, where the first processing result is used to determine a probability of tapping the item by the user, the probability of tapping the item by the user is used to determine an item recommended to the user, the first to-be-trained model is configured to: perform a linear operation on the first information to obtain second information; perform a nonlinear operation on the second information to obtain third information; and obtain the first processing result based on the third information;

a second obtaining module 1303, configured to obtain a target loss based on the probability of tapping the item by the user and a real probability of tapping the item by the user, where the target loss indicates a difference between the probability of tapping the item by the user and the real probability of tapping the item by the user; and

an update module 1304, configured to update a parameter of the first to-be-trained model based on the target loss until a model training condition is met, to obtain a first model.

The first model obtained through training in embodiments of this application has a capability of predicting user behavior. Specifically, after the first information including the attribute information of the user and the attribute information of the item is obtained, the first information may be input to the first model for processing, to obtain the first processing result. The first processing result may be used to determine the probability of tapping the item by the user. When processing the first information, the first model first performs the linear operation on the first information to obtain the second information, then performs the nonlinear operation on the first information and the second information to obtain the third information, and finally obtains the first processing result based on the second information and the third information. It can be learned that, the first model implements the nonlinear operation based on the linear operation, so that a relationship is generated between the linear operation and the nonlinear operation. In this operation process, the first model not only can implement explicit interaction and implicit interaction between information, but also can implement semi-explicit interaction between information. In other words, in this operation process, the first model can pay attention to not only a relationship between some items that frequently appear and the user and a relationship between some items that almost never appear and the user, but also a relationship between a remaining item other than the two types of items and the user. Therefore, the first model can accurately predict probabilities of tapping the two types of items by the user, and also accurately predict a probability of tapping the remaining item by the user, so that overall prediction precision of the model is improved.

In a possible implementation, the apparatus further includes: a second processing module, configured to process the first information by using a second to-be-trained model to obtain a second processing result, where the second to-be-trained model is at least one of the following: a multilayer perceptron, a convolutional network, an attention network, a Squeeze-and-Excitation network, or a model that is the same as the first to-be-trained model; and a third processing module, configured to fuse the first processing result and the second processing result by using a third to-be-trained model, where a result obtained through fusion is the probability of tapping the item by the user.

In a possible implementation, the second obtaining module is configured to obtain the target loss based on the probability of tapping the item by the user, the real probability of tapping the item by the user, the first processing result, and the second processing result, where the target loss indicates the difference between the probability of tapping the item by the user and the real probability of tapping the item by the user, a difference between the first processing result and the probability of tapping the item by the user, and a difference between the second processing result and the probability of tapping the item by the user; and the update module is configured to update the parameter of the first to-be-trained model, a parameter of the second to-be-trained model, and a parameter of the third to-be-trained model based on the target loss until the model training condition is met, to correspondingly obtain the first model, a second model, and a third model.

In a possible implementation, the first to-be-trained model is configured to: fuse the second information and the third information to obtain fourth information; and obtain the first processing result based on the fourth information.

In a possible implementation, the first to-be-trained model includes N interaction units, an input of an $i^{th}$ interaction unit is an output of an $(i-1)^{th}$ interaction unit, $N\geq1$, and i=1, ..., or N; and the first processing module 1302 is configured to: perform a linear operation on the input of the $i^{th}$ interaction unit by using the $i^{th}$ interaction unit, to obtain a linear operation result of the $i^{th}$ interaction unit; perform a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and fuse the linear operation result of the $i^{th}$ interaction unit and the nonlinear operation result of the $i^{th}$ interaction unit by using the $i^{th}$ interaction unit, to obtain an output of the $i^{th}$ interaction unit, where an input of a first interaction model is the first information, a linear operation result of the first interaction model is the second information, a nonlinear operation result of the first interaction model is the third information, an output of the first interaction model is the fourth information, and an output of an $N^{th}$ interaction model is the first processing result.

In a possible implementation, the first processing module 1302 is further configured to perform a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and the first processing module 1302 is configured to fuse the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

In a possible implementation, the first information further includes information about an operation performed by the user on the application and attribute information of the application, and the application is used to provide the item for the user.

It should be noted that, content such as information exchange between the modules/units of the apparatuses and an execution process is based on the same concept as the method embodiments of this application, and produces the same technical effects as those of the method embodiments of this application. For specific content, refer to the foregoing descriptions in the method embodiments of this application. Details are not described herein again.

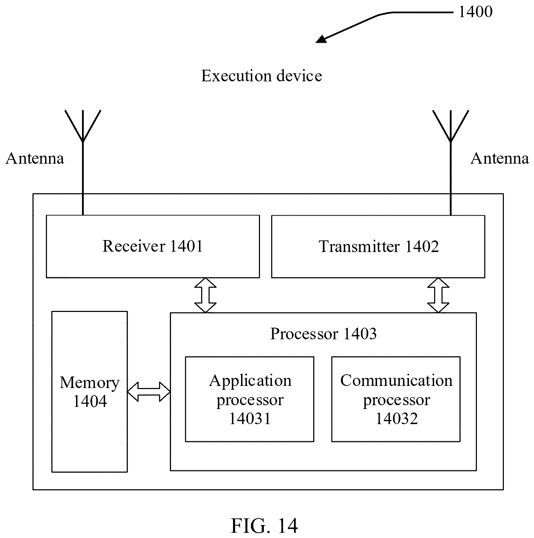

Embodiments of this application further relate to an execution device. FIG. 14 is a diagram of a structure of the execution device according to an embodiment of this application. As shown in FIG. 14, the execution device 1400 may be specifically represented as a mobile phone, a tablet computer, a notebook computer, an intelligent wearable device, a server, or the like. This is not limited herein. The item recommendation apparatus described in embodiments corresponding to FIG. 12 may be deployed on the execution device 1400, and is configured to implement the item recommendation function in embodiments corresponding to FIG. 4 or FIG. 9. Specifically, the execution device 1400 includes a receiver 1401, a transmitter 1402, a processor 1403 (there may be one or more processors 1403 in the execution device 1400, and one processor is used as an example in FIG. 14), and a memory 1404. The processor 1403 may include an application processor 14031 and a communication processor 14032. In some embodiments of this application, the receiver 1401, the transmitter 1402, the processor 1403, and the memory 1404 may be connected by using a bus or in another manner.

The memory 1404 may include a read-only memory and a random access memory, and provide instructions and data to the processor 1403. Apart of the memory 1404 may further include a non-volatile random access memory (NVRAM). The memory 1404 stores operation instructions of the processor, an executable module or a data structure, a subnet thereof, or an expanded set thereof. The operation instructions may include various operation instructions used to implement various operations.

The processor 1403 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1403 or may be implemented by the processor 1403. The processor 1403 may be an integrated circuit chip and has a signal processing capability. In an implementation process, steps in the foregoing methods can be implemented by using a hardware integrated logic circuit in the processor 1403, or by using instructions in a form of software. The processor 1403 may be a general-purpose processor, a digital signal processor (DSP), a microprocessor, or a microcontroller; and may further include an application-specific integrated circuit (ASIC), a field programmable gate array (FPGA) or another programmable logic device, a discrete gate or transistor logic device, or a discrete hardware component. The processor 1403 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing methods in combination with hardware of the processor 1403.

The receiver 1401 may be configured to: receive input digital or character information, and generate a signal input related to related settings and function control of the execution device. The transmitter 1402 may be configured to output digit or character information through a first interface. The transmitter 1402 may be further configured to send instructions to a disk group through the first interface, to modify data in the disk group. The transmitter 1402 may further include a display device, for example, a display.

In embodiments of this application, in a case, the processor 1403 is configured to perform, through the first model in embodiments corresponding to FIG. 4 or the target model in embodiments corresponding to FIG. 9, item recommendation on information associated with a user.

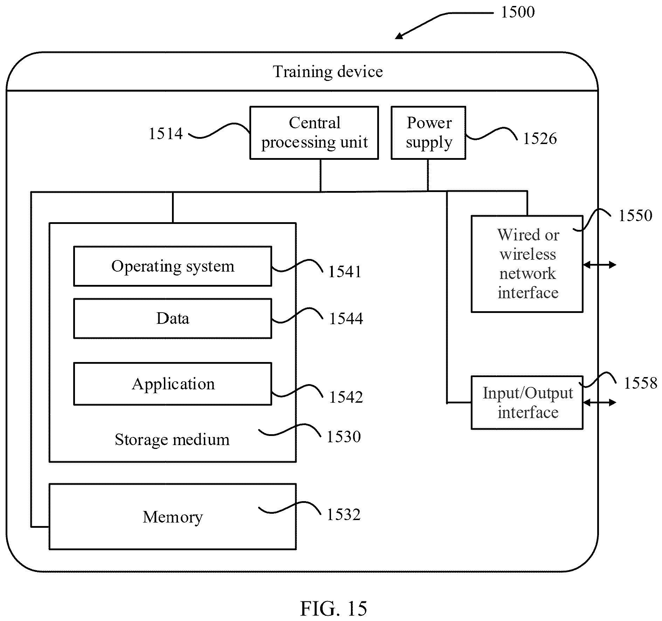

Embodiments of this application further relate to a training device. FIG. 15 is a diagram of a structure of a training device according to an embodiment of this application. As shown in FIG. 15, the training device 1500 is implemented by one or more servers. The training device 1500 may greatly differ due to different configurations or performance, and may include one or more central processing units (central processing units, CPU) 1514 (for example, one or more processors), a memory 1532, one or more storage media 1530 (for example, one or more mass storage devices) that store an application 1542 or data 1544. The memory 1532 and the storage medium 1530 may be transient storage or persistent storage. A program stored in the storage medium 1530 may include one or more modules (not shown in the figure), and each module may include a series of instruction operations performed on the training device. Further, the central processing unit 1514 may be configured to communicate with the storage medium 1530, and perform, on the training device 1500, the series of instruction operations in the storage medium 1530.

The training device 1500 may further include at least one power supply 1526, at least one wired or wireless network interface 1550, at least one input/output interface 1558, or at least one operating system 1541 such as Windows ServerTM, Mac OS XTM, UnixTM, LinuxTM, and FreeBSDTM.

Specifically, the training device may perform the model training method in embodiments corresponding to FIG. 11.

Embodiments of this application further relate to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

Embodiments of this application further relate to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a cache. Alternatively, the storage unit may be a storage unit that is in a radio access device end and that is located outside the chip, for example, a read-only memory (ROM) or another type of static storage device that may store static information and instructions, for example, a random access memory (RAM).

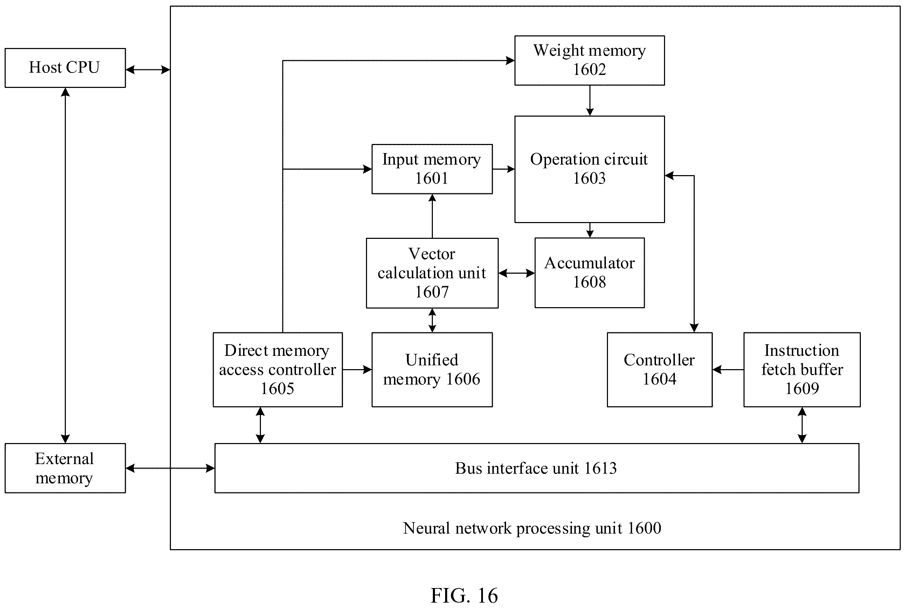

Specifically, refer to FIG. 16. FIG. 16 is a diagram of a structure of a chip according to an embodiment of this application. The chip may be represented as a neural network processing unit NPU 1600. The NPU 1600 is mounted to a host CPU (Host CPU) as a coprocessor, and the host CPU allocates a task. A core part of the NPU is an operation circuit 1603. The operation circuit 1603 is controlled by a controller 1604 to extract matrix data in a memory and perform a multiplication operation.

In some implementations, the operation circuit 1603 includes a plurality of process engines (PEs) inside. In some implementations, the operation circuit 1603 is a two-dimensional systolic array. The operation circuit 1603 may alternatively be a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602 and buffers the data on each PE in the operation circuit. The operation circuit fetches data of the matrix A from an input memory 1601, to perform a matrix operation on the matrix B, and stores an obtained partial result or an obtained final result of the matrix in an accumulator 1608.

A unified memory 1606 is configured to store input data and output data. Weight data is directly transferred to the weight memory 1602 by using a direct memory access controller (DMAC) 1605. The input data is also transferred to the unified memory 1606 through the DMAC.

A BIU is a bus interface unit, namely, a bus interface unit 1613, and is configured to perform interaction between an AXI bus, the DMAC, and an instruction fetch buffer (IFB) 1609.

The bus interface unit 1613 (BIU for short) is used by the instruction fetch buffer 1609 to obtain instructions from an external memory, and further used by the direct memory access controller 1605 to obtain original data of the input matrix A or the weight matrix B from the external memory.

The DMAC is mainly configured to: transfer input data in an external memory DDR to the unified memory 1606, transfer the weight data to the weight memory 1602, or transfer the input data to the input memory 1601.

A vector calculation unit 1607 includes a plurality of operation processing units. When necessary, further processing is performed on an output of the operation circuit 1603, such as vector multiplication, vector addition, exponential operation, logarithmic operation, and value comparison. The vector calculation unit is mainly used for non-convolutional/ fully-connected layer network calculation in a neural network, such as batch normalization, pixel-level summation, and upsampling of a predicted label plane.

In some implementations, the vector calculation unit 1607 can store processed output vectors into the unified memory 1606. For example, the vector calculation unit 1607 may apply a linear function or a nonlinear function to the output of the operation circuit 1603. For example, linear interpolation is performed on a predicted label plane extracted by a convolutional layer. For another example, vectors whose values are accumulated are used to generate an activation value. In some implementations, the vector calculation unit 1607 generates a normalized value, a pixel-level sum, or both a normalized value and a pixel-level sum. In some implementations, the processed output vector can be used as an activation input to the operation circuit 1603, for example, used at a subsequent layer of the neural network.

The instruction fetch buffer 1609 connected to the controller 1604 is configured to store instructions used by the controller 1604.

The unified memory 1606, the input memory 1601, the weight memory 1602, and the instruction fetch buffer 1609 each are an on-chip memory. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function that can be performed by a computer program can be easily implemented by using corresponding hardware, and a specific hardware structure used to achieve a same function may be in various forms, for example, in a form of an analog circuit, a digital circuit, a dedicated circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods described in embodiments of this application.

All or some of the foregoing embodiments may be implemented by software, hardware, firmware, or any combination thereof. When software is used to implement embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

**Claims**

1. An item recommendation method, wherein the method comprises:

   obtaining first information, wherein the first information comprises attribute information of a user and attribute information of an item; and
   processing the first information by using a first model to obtain a first processing result, wherein the first processing result is used to determine the item recommended to the user, and the first model is configured to: perform a linear operation on the first information to obtain second information; perform a nonlinear operation on the second information to obtain third information; and obtain the first processing result based on the third information.

2. The method according to claim 1, wherein the first model is configured to:

   perform the linear operation on the first information to obtain the second information;
   perform the nonlinear operation on the first information and the second information to obtain the third information;
   fuse the second information and the third information to obtain fourth information; and
   obtain the first processing result based on the fourth information.

3. The method according to claim 1 or 2, wherein the method further comprises:

   processing the first information by using a second model to obtain a second processing result, wherein the second model is at least one of the following: a multilayer perceptron, a convolutional network, an attention network, a Squeeze-and-Excitation network, or a model that is the same as the first model; and
   fusing the first processing result and the second processing result by using a third model, wherein a result obtained through fusion is used to determine the item recommended to the user.

4. The method according to claim 2, wherein the first model comprises N interaction units, an input of an $i^{th}$ interaction unit is an output of an $(i-1)^{th}$ interaction unit, $N \geq 1$, and $i=1, ...,$ or $N$; and the processing the first information by using a first model to obtain a first processing result comprises:

   performing a linear operation on the input of the $i^{th}$ interaction unit by using the $i^{th}$ interaction unit, to obtain a linear operation result of the $i^{th}$ interaction unit;
   performing a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and
   fusing the linear operation result of the $i^{th}$ interaction unit and the nonlinear operation result of the $i^{th}$ interaction unit by using the $i^{th}$ interaction unit, to obtain an output of the $i^{th}$ interaction unit, wherein
   an input of a first interaction unit is the first information, a linear operation result of a first interaction model is the second information, a nonlinear operation result of the first interaction model is the third information, an output of the first interaction model is the fourth information, and an output of an $N^{th}$ interaction model is the first processing result.

5. The method according to claim 4, wherein the processing the first information by using a first model to obtain a first processing result further comprises:

   performing a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and
   the fusing the linear operation result of the $i^{th}$ interaction unit and the nonlinear operation result of the $i^{th}$ interaction unit by using the $i^{th}$ interaction unit, to obtain an output of the $i^{th}$ interaction unit comprises:
   fusing the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

6. The method according to any one of claims 1 to 5, wherein the first information further comprises information about an operation performed by the user on an application and attribute information of the application, and the application is used to provide the item for the user.

7. A model training method, wherein the method comprises:

obtaining first information, wherein the first information comprises attribute information of a user and attribute information of an item;
processing the first information by using a first to-be-trained model to obtain a first processing result, wherein the first processing result is used to determine a probability of tapping the item by the user, the probability of tapping the item by the user is used to determine the item recommended to the user, the first to-be-trained model is configured to: perform a linear operation on the first information to obtain second information; perform a nonlinear operation on the second information to obtain third information; and obtain the first processing result based on the third information;
obtaining a target loss based on the probability of tapping the item by the user and a real probability of tapping the item by the user, wherein the target loss indicates a difference between the probability of tapping the item by the user and the real probability of tapping the item by the user; and
updating a parameter of the first to-be-trained model based on the target loss until a model training condition is met, to obtain a first model.

8. The method according to claim 7, wherein the method further comprises:

processing the first information by using a second to-be-trained model to obtain a second processing result, wherein the second to-be-trained model is at least one of the following: a multilayer perceptron, a convolutional network, an attention network, a Squeeze-and-Excitation network, or a model that is the same as the first to-be-trained model; and
fusing the first processing result and the second processing result by using a third to-be-trained model, wherein a result obtained through fusion is the probability of tapping the item by the user.

9. The method according to claim 8, wherein the obtaining a target loss based on the probability of tapping the item by the user and a real probability of tapping the item by the user comprises:

obtaining the target loss based on the probability of tapping the item by the user, the real probability of tapping the item by the user, the first processing result, and the second processing result, wherein the target loss indicates the difference between the probability of tapping the item by the user and the real probability of tapping the item by the user, a difference between the first processing result and the probability of tapping the item by the user, and a difference between the second processing result and the probability of tapping the item by the user; and
the updating a parameter of the first to-be-trained model based on the target loss until a model training condition is met, to obtain a first model comprises:
updating the parameter of the first to-be-trained model, a parameter of the second to-be-trained model, and a parameter of the third to-be-trained model based on the target loss until the model training condition is met, to correspondingly obtain the first model, a second model, and a third model.

10. An item recommendation apparatus, wherein the apparatus comprises:

an obtaining module, configured to obtain first information, wherein the first information comprises attribute information of a user and attribute information of an item; and
a first processing module, configured to process the first information by using a first model to obtain a first processing result, wherein the first processing result is used to determine the item recommended to the user, and the first model is configured to: perform a linear operation on the first information to obtain second information; perform a nonlinear operation on the second information to obtain third information; and obtain the first processing result based on the third information.

11. The apparatus according to claim 10, wherein the first model is configured to:

perform the linear operation on the first information to obtain the second information;
perform the nonlinear operation on the first information and the second information to obtain the third information;
fuse the second information and the third information to obtain fourth information; and
obtain the first processing result based on the fourth information.

12. The apparatus according to claim 10 or 11, wherein the apparatus further comprises:

a second processing module, configured to process the first information by using a second model to obtain a second processing result, wherein the second model is at least one of the following: a multilayer perceptron, a convolutional network, an attention network, a Squeeze-and-Excitation network, or a model that is the same as the first model; and
a third processing module, configured to fuse the first processing result and the second processing result by using a third model, wherein a result obtained through fusion is used to determine the item recommended to the user.

13. The apparatus according to claim 11, wherein the first model comprises N interaction units, an input of an $i^{th}$ interaction unit is an output of an $(i-1)^{th}$ interaction unit, N$\geq$1, and i=1, ..., or N; and the first processing module is configured to:

perform a linear operation on the input of the $i^{th}$ interaction unit by using the $i^{th}$ interaction unit, to obtain a linear operation result of the $i^{th}$ interaction unit;
perform a nonlinear operation on the input of the $i^{th}$ interaction unit and the linear operation result of the $i^{th}$ interaction unit by using the $i^{th}$ interaction unit, to obtain a nonlinear operation result of the $i^{th}$ interaction unit; and
fuse the linear operation result of the $i^{th}$ interaction unit and the nonlinear operation result of the $i^{th}$ interaction unit by using the $i^{th}$ interaction unit, to obtain an output of the $i^{th}$ interaction unit, wherein
an input of a first interaction unit is the first information, a linear operation result of a first interaction model is the second information, a nonlinear operation result of the first interaction model is the third information, an output of the first interaction model is the fourth information, and an output of an $N^{th}$ interaction model is the first processing result.

14. The apparatus according to claim 13, wherein the first processing module is further configured to perform a nonlinear operation on the input of the $i^{th}$ interaction unit and the nonlinear operation result of the $i^{th}$ interaction unit by using the $i^{th}$ interaction unit, to obtain a new nonlinear operation result of the $i^{th}$ interaction unit; and
the first processing module is configured to fuse the linear operation result of the $i^{th}$ interaction unit, the nonlinear operation result of the $i^{th}$ interaction unit, and the new nonlinear operation result of the $i^{th}$ interaction unit by using the $i^{th}$ interaction unit, to obtain the output of the $i^{th}$ interaction unit.

15. The apparatus according to any one of claims 10 to 14, wherein the first information further comprises information about an operation performed by the user on an application and attribute information of the application, and the application is used to provide the item for the user.

16. A model training apparatus, wherein the apparatus comprises:

a first obtaining module, configured to obtain first information, wherein the first information comprises attribute information of a user and attribute information of an item;
a first processing module, configured to process the first information by using a first to-be-trained model to obtain a first processing result, wherein the first processing result is used to determine a probability of tapping the item by the user, the probability of tapping the item by the user is used to determine the item recommended to the user, the first to-be-trained model is configured to: perform a linear operation on the first information to obtain second information; perform a nonlinear operation on the second information to obtain third information; and obtain the first processing result based on the third information;
a second obtaining module, configured to obtain a target loss based on the probability of tapping the item by the user and a real probability of tapping the item by the user, wherein the target loss indicates a difference between the probability of tapping the item by the user and the real probability of tapping the item by the user; and
an update module, configured to update a parameter of the first to-be-trained model based on the target loss until a model training condition is met, to obtain a first model.

17. The apparatus according to claim 16, wherein the apparatus further comprises:

a second processing module, configured to process the first information by using a second to-be-trained model to obtain a second processing result, wherein the second to-be-trained model is at least one of the following: a multilayer perceptron, a convolutional network, an attention network, a Squeeze-and-Excitation network, or a model that is the same as the first to-be-trained model; and

a third processing module, configured to fuse the first processing result and the second processing result by using a third to-be-trained model, wherein a result obtained through fusion is the probability of tapping the item by the user.

18. The apparatus according to claim 17, wherein the second obtaining module is configured to obtain the target loss based on the probability of tapping the item by the user, the real probability of tapping the item by the user, the first processing result, and the second processing result, wherein the target loss indicates the difference between the probability of tapping the item by the user and the real probability of tapping the item by the user, a difference between the first processing result and the probability of tapping the item by the user, and a difference between the second processing result and the probability of tapping the item by the user; and

the update module is configured to update the parameter of the first to-be-trained model, a parameter of the second to-be-trained model, and a parameter of the third to-be-trained model based on the target loss until the model training condition is met, to correspondingly obtain the first model, a second model, and a third model.

19. An item recommendation apparatus, wherein the apparatus comprises a memory and a processor, the memory stores code, the processor is configured to execute the code, and when the code is executed, the item recommendation apparatus performs the method according to any one of claims 1 to 9.

20. A computer storage medium, wherein the computer storage medium stores one or more instructions, and when the instructions are executed by one or more computers, the one or more computers are enabled to implement the method according to any one of claims 1 to 9.

21. A computer program product, wherein the computer program product stores instructions, and when the instructions are executed by a computer, the computer is enabled to implement the method according to any one of claims 1 to 9.

Intelligent information chain

Intelligent product and industry application

| Translation/Text analysis/... | Voice/Visual/Image/... |

Data

Data processing:

| Data training/Machine learning/ Deep learning | Searching/ Inference/Decision making | ... |

Infrastructure

| Sensor | Intelligent chip | Basic platform | ... |

IT value chain

FIG. 1

EP 4 524 774 A1

Interaction interface

Information | Information processing result

Memory ⟺ Processor | Data training/Machine learning/Deep learning | Searching/ Inference/ Decision making | ...

Data processing device (server)

13:21

FIG. 2a

FIG. 2b

EP 4 524 774 A1

300

Execution device 210

Data storage system 250

Communication network

Local device 301

Local device 302

Examples

FIG. 2c

FIG. 3

Obtain first information, where the first information includes attribute information of a user and attribute information of an item

401

Process the first information by using a first model to obtain a first processing result, where the first processing result is used as a probability of tapping the item by the user, and the first model is configured to: perform a linear operation on the first information to obtain second information; perform a nonlinear operation on the first information and the second information to obtain third information; and obtain the first processing result based on the second information and the third information

402

FIG. 4

First processing result

First model

Interaction unit

Fusion layer

Linear layer

Nonlinear layer

First information

FIG. 5

FIG. 6

First processing result

First model

Nth interaction unit

Fusion layer

Linear layer → Nonlinear layer

...

Second interaction unit

Fusion layer

Linear layer → Nonlinear layer

First interaction unit

Fusion layer

Linear layer → Nonlinear layer

First information

FIG. 7

FIG. 8

Obtain first information, where the first information includes attribute information of a user and attribute information of an item — 901

Process the first information by using a first model to obtain a first processing result, where the first model is configured to: perform a linear operation on the first information to obtain second information; perform a nonlinear operation on the first information and the second information to obtain third information; and obtain the first processing result based on the second information and the third information — 902

Process the first information by using a second model to obtain a second processing result — 903

Fuse the first processing result and the second processing result by using a third model, to obtain a probability of tapping the item by the user — 904

FIG. 9

Probability of tapping an item by a user

Third model

First processing result          Second processing result

Target model

First model          Second model

First information

FIG. 10

Obtain first information, where the first information includes attribute information of a user and attribute information of an item
1101

Process the first information by using a first to-be-trained model to obtain a first processing result, where the first processing result is used to determine a probability of tapping the item by the user, and the first to-be-trained model is configured to: perform a linear operation on the first information to obtain second information; perform a linear operation on the first information and the second information to obtain third information; and obtain the first processing result based on the second information and the third information
1102

Obtain a target loss based on the probability of tapping the item by the user and a real probability of tapping the item by the user, where the target loss indicates a difference between the probability of tapping the item by the user and the real probability of tapping the item by the user
1103

Update a parameter of the first to-be-trained model based on the target loss until a model training condition is met, to obtain a first model
1104

FIG. 11

Item recommendation apparatus

Obtaining module
1201

First processing module
1202

FIG. 12

FIG. 13

1400

Execution device

Antenna                                    Antenna

| Receiver 1401 | Transmitter 1402 |

Processor 1403

| Memory 1404 | Application processor 14031 | Communication processor 14032 |

FIG. 14

1500

Training device

1514 — Central processing unit

Power supply ～ 1526

～ 1550

Wired or wireless network interface

Operating system ～ 1541

Data ～ 1544

Application ～ 1542

Storage medium ～ 1530

Input/Output interface ～ 1558

Memory ～ 1532

FIG. 15

| Host CPU | | Weight memory 1602 |
|---|---|---|

Input memory 1601

Operation circuit 1603

Vector calculation unit 1607

Accumulator 1608

Direct memory access controller 1605

Unified memory 1606

Controller 1604

Instruction fetch buffer 1609

External memory

Bus interface unit 1613

Neural network processing unit 1600

FIG. 16

EP 4 524 774 A1

## INTERNATIONAL SEARCH REPORT

| International application No. |
| --- |
| **PCT/CN2023/098289** |

| A. | CLASSIFICATION OF SUBJECT MATTER |
| --- | --- |

G06F16/9535(2019.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, CNABS, DWPI, USTXT, WOTXT, EPTXT, CNKI, ISI: 推荐, 点击率, 预测, 线性, 非线性, 因式分解, 交互, recommend, CTR, predict, linear, nonlinear, factorize, interaction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110851713 A (TENCENT TECHNOLOGY (BEIJING) CO., LTD.) 28 February 2020 (2020-02-28) <br> description, paragraphs 51-205, and figures 3-5 | 1, 3, 6-10, 12, 15-21 |
| X | CN 110033342 A (ALIBABA GROUP HOLDING LIMITED) 19 July 2019 (2019-07-19) <br> description, paragraphs 81-209, and figure 3 | 1, 3, 6-10, 12, 15-21 |
| X | CN 114117216 A (GUANGZHOU BOGUAN INFORMATION SCIENCE & TECHNOLOGY CO., LTD.) 01 March 2022 (2022-03-01) <br> description, paragraphs 34-91, and figures 2-3 | 1, 3, 6, 10, 12, 15, 19-21 |
| A | CN 113508378 A (HUAWEI TECHNOLOGIES CO., LTD.) 15 October 2021 (2021-10-15) <br> entire document | 1-21 |
| A | US 2008300986 A1 (NHN CORP.) 04 December 2008 (2008-12-04) <br> entire document | 1-21 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 August 2023** | **29 August 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/098289** |

| Patent document cited in search report | | | Publication date (day/month/year) | Patent family member(s) | | | Publication date (day/month/year) |
| --- | --- | --- | --- | --- | --- | --- | --- |
| CN | 110851713 | A | 28 February 2020 | HK | 40021079 | A0 | 30 October 2020 |
| | | | | CN | 110851713 | B | 30 May 2023 |
| CN | 110033342 | A | 19 July 2019 | | None | | |
| CN | 114117216 | A | 01 March 2022 | | None | | |
| CN | 113508378 | A | 15 October 2021 | WO | 2021081962 | A1 | 06 May 2021 |
| | | | | EP | 3862893 | A1 | 11 August 2021 |
| | | | | US | 2021248651 | A1 | 12 August 2021 |
| | | | | EP | 3862893 | A4 | 01 December 2021 |
| US | 2008300986 | A1 | 04 December 2008 | JP | 2008299843 | A | 11 December 2008 |
| | | | | KR | 20090002017 | A | 09 January 2009 |
| | | | | KR | 926878 | B1 | 16 November 2009 |
| | | | | JP | 4901808 | B2 | 21 March 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210641372